(19) Europäisches Patentamt

European Patent Office

Office européen des brevets

(11) **EP 2 808 521 B1**

(12) **EUROPEAN PATENT SPECIFICATION**

(45) Date of publication and mention
of the grant of the patent:
**19.09.2018 Bulletin 2018/38**

(21) Application number: **12866610.4**

(22) Date of filing: **24.01.2012**

(51) Int Cl.:
*F02D 29/02* *(2006.01)*        *F02N 11/08* *(2006.01)*

(86) International application number:
**PCT/JP2012/000417**

(87) International publication number:
**WO 2013/111178 (01.08.2013 Gazette 2013/31)**

(54) **VEHICLE CONTROL DEVICE, VEHICLE, AND VEHICLE CONTROL METHOD**

FAHRZEUGSTEUERUNGSVORRICHTUNG, FAHRZEUG UND
FAHRZEUGSTEUERUNGSVERFAHREN

DISPOSITIF DE COMMANDE DE VÉHICULE, VÉHICULE, ET PROCÉDÉ DE COMMANDE DE
VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.12.2014 Bulletin 2014/49**

(73) Proprietor: **Toyota Jidosha Kabushiki Kaisha
Toyota-shi, Aichi 471-8571 (JP)**

(72) Inventors:
• **TOCHIGI, Kohei
Toyota-shi
Aichi 471-8571 (JP)**
• **ITO, Koji
Toyota-shi
Aichi 471-8571 (JP)**

• **MIYASHITA, Michihiro
Toyota-shi
Aichi 471-8571 (JP)**
• **UEKI, Nobukazu
Toyota-shi
Aichi 471-8571 (JP)**

(74) Representative: **TBK
Bavariaring 4-6
80336 München (DE)**

(56) References cited:
**EP-A1- 1 220 413        EP-A1- 2 138 711
JP-A- 2004 003 460        JP-A- 2005 020 854
JP-A- 2010 174 827        JP-A- 2010 174 827
US-A1- 2002 017 261        US-A1- 2010 217 484**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

TECHNICAL FIELD

The invention relates to a vehicle control apparatus that is mounted in a vehicle having an engine and a battery, the vehicle, and a vehicle control method.

BACKGROUND ART

A motor vehicle is mounted with an engine and a battery, and the battery is charged by a motive power of the engine. Besides, in the motor vehicle, idling stop (referred to also as idle reduction) control is known as an art of economizing on the amount of fuel consumption. In a vehicle in which idling stop control is performed, a battery is utilized in a partial state of charge (a PSOC). The utilization in the PSOC may reduce the service life of the battery, and therefore, the battery is desired to be fully charged on a regular basis. For this purpose, there is proposed an art of stopping idling stop until the state of charge (the SOC) of the battery becomes full or almost full (see Patent Document 1).

Related Art Documents

Patent Documents

Patent Document 1: Japanese Patent Application Publication No. 2010-174827 (JP-2010-174827 A)

Patent Document 2: Japanese Patent Application Publication No. 2010-223217 (JP-2010-223217 A)

Patent Document 3: US 2002/017261 A1

Patent Document 4: US 2010/217484 A1

Patent Document 5: JP 2010 174827 A

Patent Document 6: EP 1 220 413 A1

However, in the foregoing conventional art, when idling stop is prohibited with the intention of satisfying a request to charge the battery, an engine does not stop during stoppage of the vehicle, which makes it impossible for a driver to attain idling stop as desired. Thus, there is a problem in that a request to fully charge the battery and a request to execute idling stop cannot be made compatible with each other.

**SUMMARY OF THE INVENTION**

Problem to Be Solved by the Invention

The invention has been made to solve at least part of the aforementioned conventional problem. It is an object of the invention to make a request to fully charge a battery and a request to execute idling stop compatible with each other.

Means for Solving the Problem

In order to solve at least part of the aforementioned problem, there is provided a vehicle control apparatus as defined in claim 1, a vehicle as defined in claim 7 and a vehicle control method as defined in claim 8. Further aspects and features of the present invention are set out in the dependent claims.
The invention can adopt the following modes or application examples.

[Application Example 1]

A vehicle control apparatus is mounted in a vehicle having an engine, and a battery that can be charged by an electric power generator that is driven by a motive power of the engine. The vehicle control apparatus is equipped with an idling stop control unit that stops the engine, an SOC change amount detection unit that detects an amount of change in a state of charge (an SOC) of the battery, and an execution restriction unit that permits and prohibits stop of the engine by the idling stop control unit in accordance with the amount of change in the SOC. The execution restriction unit determines timings for the permission and the prohibition such that an amount of increase in the SOC at a time when the engine is not stopped by the idling stop control unit becomes larger than an amount of decrease in the SOC at a time when the engine is stopped.

According to the vehicle control apparatus of the application example 1, stop of the engine by idling stop control is permitted or prohibited such that the amount of increase in the SOC at the time when the engine is not stopped becomes larger than the amount of decrease in the SOC at the time when the engine is stopped. Thus, the battery makes a transition to a tendency to be charged as a whole. Accordingly, the battery can be charged while controlling idling stop control. Therefore, a request to fully charge the battery and a request to execute idling stop can be made compatible with each other.

[Application Example 2]

In the vehicle control apparatus mentioned in the application example 1, the idling stop control unit stops the engine if a predetermined stop condition is fulfilled, and restarts the engine if a predetermined restart condition is fulfilled during stop of the engine, and the execution restriction unit is equipped with an idling stop restart request unit that executes the prohibition by restarting the engine if the amount of decrease in the SOC at the time when the engine is stopped exceeds a first predetermined value, and an idling stop permission unit that permits stop of the engine by the idling stop control if the amount of increase in the SOC at the time when the engine is not stopped exceeds a second predetermined value.

According to this configuration, the amount of decrease in the SOC and the amount of increase in the SOC can be adjusted through the magnitudes of the first predetermined value and the second predetermined value. Therefore, a transition of the battery to a tendency to be charged can be easily realized.

[Application Example 3]

The vehicle control apparatus mentioned in the application example 2 is further equipped with a first time calculation unit that calculates a first time from stop of the engine to restart of the engine as requested of the idling stop control, an auxiliary group consumption current calculation unit that calculates an auxiliary group consumption current that is consumed by an auxiliary group that operates with an aid of the SOC of the battery, and a first predetermined value calculation unit that calculates the first predetermined value on a basis of the first time and the auxiliary group consumption current.

According to this configuration, the first predetermined value can be changed in accordance with the first time from stop of the engine to restart of the engine as requested of idling stop control, and the auxiliary group consumption current. Accordingly, the engine can be restarted at a suitable timing.

[Application Example 4]

The vehicle control apparatus mentioned in the application example 3 is further equipped with a battery charge request degree calculation unit that detects a charge request degree of the battery, and a first predetermined value correction unit that corrects, on a basis of the charge request degree, the first predetermined value that is calculated by the first predetermined value calculation unit.

According to this configuration, the timing for restart can be adjusted in accordance with the charge request degree of the battery.

[Application Example 5]

The vehicle control apparatus mentioned in any one of the application examples 2 to 4 is further equipped with a second time calculation unit that calculates a second time when stop of the engine on the stop condition after restart of the engine is prohibited, as permitted in the idling stop control, a charge current estimation unit that estimates a charge current of the battery per unit time, and a second predetermined value calculation unit that calculates the second predetermined value on a basis of the second time and the charge current.

According to this configuration, the second predetermined value can be changed in accordance with the second time when stop of the engine on the stop condition after restart of the engine is prohibited, as permitted in idling stop control, and the estimated value of the charge current of the battery. Accordingly, stop of the engine by idling stop control can be permitted at a suitable timing.

[Application Example 6]

The vehicle control apparatus mentioned in the application example 5 is further equipped with a battery charge request degree calculation unit that detects a charge request degree of the battery, and a first predetermined value correction unit that corrects, on a basis of the charge request degree, the second predetermined value that is calculated by the second predetermined value calculation unit.

According to this configuration, the timing for permitting stop of the engine can be adjusted in accordance with the charge request degree of the battery.

[Application Example 7]

The vehicle control apparatus mentioned in any one of the application examples 1 to 6 is further equipped with a surplus charge amount calculation unit that calculates, as a surplus charge amount, a difference between an actual change in the SOC and an SOC transition target change that repeatedly falls in accordance with the first predetermined value and rises in accordance with the second predetermined value, and a surplus correction unit that corrects the second predetermined value by subtracting the surplus charge amount from the second predetermined value.

According to this configuration, the second predetermined value can be reduced in accordance with the surplus charge amount. Therefore, a driver's request for idling stop is easy to handle.

[Application Example 8]

A vehicle control apparatus is mounted in a vehicle having an engine, and a battery that can be charged by an electric power generator that is driven by a motive power of the engine. The vehicle control apparatus is equipped with an idling stop control unit that stops the engine, and an execution restriction unit that determines timings for permitting and prohibiting stop of the engine by the idling stop control unit such that a state of charge (an SOC) of the battery makes a transition to a tendency to increase as a whole, if there is a request to fully charge the battery.

According to this configuration, the battery can be fully charged while controlling stop of the engine by idling stop control. Therefore, a request to fully charge the battery and a request to execute idling stop can be made compatible with each other.

[Application Example 9]

A vehicle is equipped with an engine, a battery that can be charged by an electric power generator that is driven by a motive power of the engine, an idling stop control unit that stops the engine, an SOC change amount detection unit that detects an amount of change in a state of charge (an SOC) of the battery, an execution restriction unit that permits and prohibits stop of the engine by the idling stop control unit in accordance with the amount of change in the SOC. The execution restriction unit determines timings for the permission and the prohibition such that an amount of increase in the SOC at a time when the engine is not stopped by the idling stop control unit becomes larger than an amount of decrease in the SOC at a time when the engine is stopped.

[Application Example 10]

A vehicle control method controls a vehicle having an engine, and a battery that can be charged by an electric power generator that is driven by a motive power of the engine. The vehicle control method is equipped with an idling stop control process of stopping the engine, an SOC change amount detection process of detecting an amount of change in a state of charge (an SOC) of the battery, and an execution restriction process of permitting and prohibiting stop of the engine by the idling stop control process in accordance with the amount of change in the SOC. The execution restriction process determines timings for the permission and the prohibition such that an amount of increase in the SOC at a time when the engine is not stopped by the idling stop control process becomes larger than an amount of decrease in the SOC at a time when the engine is stopped.

Incidentally, the invention can be carried out in various modes. For example, the invention can be realized in the mode of a control system that is equipped with the vehicle control apparatus, a computer program for causing a computer to realize functions corresponding to the respective processes of the vehicle control method, a storage medium in which the computer program is recorded, or the like.

BRIEF DESCRIPTION OF THE DRAWINGS

[FIG. 1] FIG. 1 is an illustrative view showing the configuration of a motor vehicle 200 as one embodiment of the invention.

[FIG. 2] FIG. 2 is an illustrative view functionally showing the configuration of an ECU 50.

[FIG. 3] FIG. 3 is a flowchart showing an idling stop execution restriction processing.

[FIG. 4] FIG. 4 is a flowchart showing a charge current integrated value calculation processing.

[FIG. 5] FIG. 5 is a flowchart showing a discharge current integrated value calculation processing.

[FIG. 6] FIG. 6 is an illustrative view showing a time chart about an SOC in the first embodiment of the invention.

[FIG. 7] FIG. 7 is an illustrative view showing the functional configuration of an ECU 50X of the second embodiment of the invention.

[FIG. 8] FIG. 8 is a flowchart showing a restart criterial value calculation processing that is performed by the ECU 50X.

[FIG. 9] FIG. 9 is an illustrative view showing a time chart about a vehicle speed.

[FIG. 10] FIG. 10 is an illustrative view showing a histogram of a stoppage time Ta.

[FIG. 11A] FIG. 11A is a graph showing a relationship among a unit IS request time TS1, an auxiliary consumption current Ac, and a tentative value FZ1 of a restart criterial value Z1.

[FIG. 11B] FIG. 11B is an illustrative view showing how to obtain the restart criterial value Z1 from the tentative value.

[FIG. 12] FIG. 12 is a flowchart showing a permission criterial value calculation processing that is performed by the ECU 50X.

[FIG. 13] FIG. 13 is an illustrative view showing a histogram of a continuous running time Tb.

[FIG. 14] FIG. 14 is an illustrative view showing an example of a map for obtaining a battery charge current.

[FIG. 15A] FIG. 15A is a graph showing a relationship among a unit IS permission prohibition time TS2, an integrated value $\Sigma XAb$ about an estimated value of the battery charge current, and a tentative value FZ2 of a permission criterial value Z2.

[FIG. 15B] FIG. 15B is an illustrative view showing how to obtain the permission criterial value Z2 from the tentative value.

[FIG. 16] FIG. 16 is a flowchart showing an electric power generation voltage variability control processing.

[FIG. 17] FIG. 17 is a flowchart showing a surplus charge amount calculation processing.

[FIG. 18] FIG. 18 is a flowchart showing a permission criterial value variability processing.

[FIG. 19] FIG. 19 is an illustrative view showing one example of changes in the SOC in the first case.

[FIG. 20] FIG. 20 is an illustrative view showing one example of changes in the SOC in the second case.

MODES FOR CARRYING OUT THE INVENTION

Next, modes for carrying out the invention will be described on the basis of the embodiments thereof, in the following order.

A. First Embodiment:

    A1. Overall Configuration:
    A2. Configuration of ECU:
    A3. Configuration of Control Processing
    A4. Operation and Effect:

B. Second Embodiment:
C. Third Embodiment:
D. Fourth Embodiment:
E. Modification Examples:

A. First Embodiment:

A1. Overall Configuration:

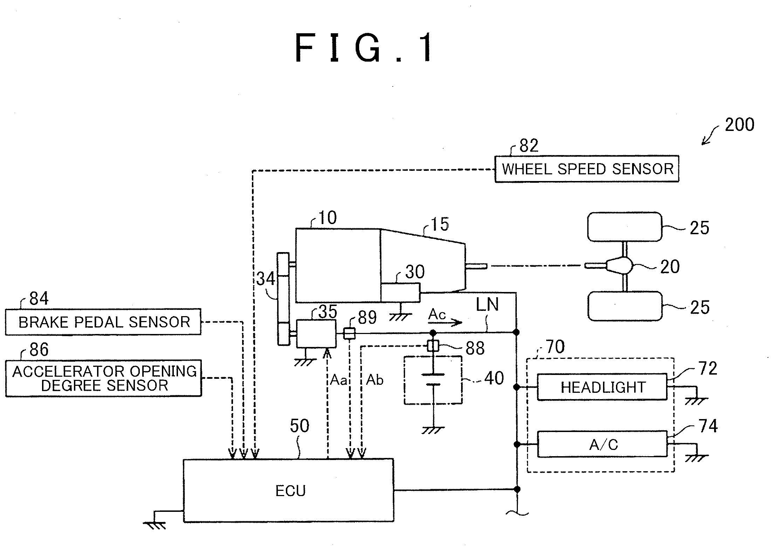

FIG. 1 is an illustrative view showing the configuration of the motor vehicle 200 as the first embodiment of the invention. The motor vehicle 200 is a vehicle that is endowed with an idling stop function. The motor vehicle 200 is equipped with an engine 10, an automatic transmission 15, a differential gear 20, driving wheels 25, a starter 30, an alternator 35, a battery 40, and an electrical control unit (an ECU) 50.

The engine 10 is an internal combustion engine that generates a motive power through the combustion of fuel such as gasoline, diesel oil or the like. The motive power of the engine 10 is transmitted to the automatic transmission 15, and is transmitted to the alternator 35 via a drive mechanism 34. The output of the engine 10 is changed by an engine control computer (not shown), in accordance with the depression amount of an accelerator pedal (not shown) that is operated by a driver.

The automatic transmission 15 automatically changes the speed ratio (carries out so-called shift change). A motive power (a rotational speed/torque) of the engine 10 is changed in speed by the automatic transmission 15, and is transmitted, as a desired rotational speed/torque, to the right and left driving wheels 25 via the differential gear 20. In this manner, the motive power of the engine 10 is transmitted to the driving wheels 25 via the automatic transmission 15 while being changed in accordance with the depression amount of the accelerator pedal, so that the vehicle (the motor vehicle 200) is accelerated/decelerated.

In this embodiment of the invention, the drive mechanism 34 that transmits the motive power of the engine 10 to the alternator 35 adopts a belt-drive configuration. The alternator 35 generates an electric power through the use of part of the motive power of the engine 10. The generated electric power is used to charge the battery 40 via an inverter (not shown). In the present specification, electric power generation that results from the motive power of the engine 10 through the use of the alternator 35 is referred to as "fuel electric power generation". The alternator 35 is equivalent to "the electric power generator" mentioned in the section of [Means for Solving the Problem].

The battery 40 is a lead storage battery as a direct-current electric power supply with a voltage of 14 V, and supplies electric power to peripheral instruments that are not provided on an engine body. In the present specification, a peripheral instrument that is not provided on the engine body and operates with the aid of the electric power of the battery 40 is referred to as "an auxiliary". Besides, a group of auxiliaries is referred to as "an auxiliary group". The motor vehicle 200 is equipped with a headlight 72, an air-conditioner (an A/C) 74 and the like, as the auxiliary group 70.

The starter 30 is a cell motor that starts the engine 10 with the aid of the electric power supplied from the battery 40. Normally, if the driver operates an ignition switch (not shown) in starting to drive the stopped motor vehicle, the starter 30 is activated to start the engine 10. As will be described below, this starter 30 is also utilized in restarting the engine 10 from an idling stop state. In the present specification, "the idling stop state" means a state where the engine 10 is stopped through idling stop control.

The ECU 50 is equipped with a CPU that executes a computer program, a ROM that stores the computer program and the like, a RAM that temporarily stores data, an input/output port that is connected to various sensors, actuators and the like, and the like. As the sensors connected to the ECU 50, a wheel speed sensor 82 that detects a rotational speed of each of the driving wheels 25, a brake pedal sensor 84 that detects the presence or absence of depression of a brake pedal (not shown), an accelerator opening degree sensor 86 that detects a depression amount of an accelerator pedal (not shown) as an accelerator opening degree, a battery current sensor 88 that detects a charge/discharge current of the battery 40, an alternator current sensor 89 that detects an output current of the alternator 35, and the like are provided. The starter 30, the alternator 35 and the like fall under the category of actuators. The ECU 50 is supplied with electric power from the battery 40.

The ECU 50 controls the starter 30 and the alternator 35 on the basis of signals from the foregoing various sensors and the engine control computer (not shown), thereby controlling the stop and restart of the engine (idling stop control) and controlling the SOC of the battery 40. This ECU 50 is a vehicle control apparatus that is directly associated with the invention.

A2. Configuration of ECU

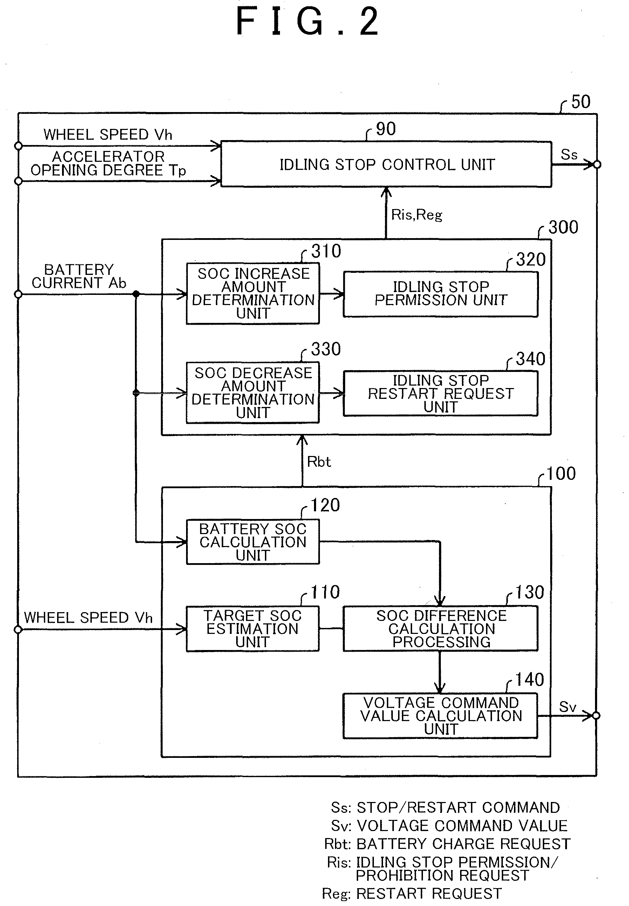

FIG. 2 is an illustrative view functionally showing the configuration of the ECU 50. As shown in the drawing, the ECU 50 is equipped with an idling stop control unit 90, an SOC control unit 100, an execution restriction unit 300 that restricts the stop of the engine by idling stop control. In fact, the respective units 90, 100, and 300 indicate functions that are realized through the execution of the computer program stored in the ROM by the CPU that is installed in the ECU 50.

The idling stop control unit 90 acquires a wheel speed Vh detected by the wheel speed sensor 82 and an accelerator opening degree Tp detected by the accelerator opening degree sensor 86, and outputs a command Ss to stop/start the engine 10 to the starter 30. More specifically, the idling stop control unit 90 outputs the command Ss to stop the engine to the starter 30 on the assumption that an engine stop condition is fulfilled, if the wheel speed Vh falls to become lower than a predetermined speed (e.g., 10 km/h), and afterward, outputs the command Ss to restart the engine to starter 30 on the assumption that an engine restart condition is fulfilled, if it is detected that the accelerator pedal is depressed from the accelerator opening degree Tp.

That is, the idling stop control unit 90 stops the engine 10 if the engine stop condition is fulfilled, and restarts the engine 10 if the engine restart condition is fulfilled after the stop. The engine stop condition and the engine restart condition are not limited to the foregoing. For example, the engine stop condition can also be defined as a condition that the wheel speed Vh be completely equal to 0 km/h, and the engine restart condition can also be defined as a condition that the driver's foot be out of contact with the brake pedal.

The SOC control unit 100 is equipped with a target SOC estimation unit 110, a battery SOC calculation unit 120, an SOC difference calculation unit 130, and a voltage command value calculation unit 140. The target SOC estimation unit 110 estimates an SOC that is expected to be used in a period (hereinafter referred to as "an idling stop period") from the stop of the engine to the restart of the engine by idling stop control, as a target SOC (hereinafter referred to also as "a target SOC value"), during the running of the vehicle (e.g., when the wheel speed Vh > 0 km/h). More specifically, the target SOC is obtained as follows. Incidentally, "the SOC" is defined as a value that is obtained by dividing an amount of electricity that remains in the battery by an amount of electricity that is accumulated when the battery is fully charged.

The frequency or length of the stop of the engine realized by idling stop control changes depending on the running environment of the vehicle (an urban area, a suburb, or the like). The target SOC estimation unit 110 predicts a running environment on the basis of the wheel speed Vh detected by the wheel speed sensor 82, and calculates, on the basis of the running environment, a target SOC that is expected to be used in an idling stop start period. Incidentally, the target SOC estimation unit 110 does not need to be limited to this configuration. For example, this configuration can also be replaced with a configuration in which an amount of electric power consumed by the auxiliary group 70 is calculated from an operating status of the auxiliary group 70 and the target SOC is calculated on the basis of this amount of electric power, or the like. In short, a configuration of obtaining the target SOC from any parameter can also be adopted as long as the SOC for use can be estimated in the idling stop period. Besides, there is no need to limit the invention to a configuration in which the target SOC can be changed in accordance with the parameter. The target SOC can also be a fixed value determined in advance.

The battery SOC calculation unit 120 calculates a present SOC (hereinafter referred to as "a present SOC value") C2 of the battery 40 on the basis of a charge/discharge current of the battery 40 (referred to as "a battery current") Ab detected by the battery current sensor 88. More specifically, the battery SOC calculation unit 120 calculates the present SOC value C2 by integrating the charge/discharge current Ab on the assumption that the charge current of the battery 40 assumes a positive value and that the discharge current of the battery 40 assumes a negative value. Incidentally, the battery SOC calculation unit is not absolutely required to calculate the present SOC value on the basis of the battery current detected by the battery current sensor 88, but may be configured to obtain the present SOC value on the basis of a battery electrolyte specific gravity sensor, a cell voltage sensor, a battery terminal voltage sensor or the like. Furthermore, the battery SOC calculation unit does not need to be limited to the configuration of obtaining an amount of the electricity remaining in the battery either, and can be designed, for example, to obtain a state of charge using another parameter, for example, a possible charge amount or the like.

The SOC difference calculation unit 130 obtains a difference value by subtracting the present SOC value C2 from the target SOC value C1, during the running of the vehicle. The voltage command value calculation unit 140 obtains a voltage command value Sv for making the difference value obtained by the SOC difference calculation unit 130 coincident with the value of 0 through feedback control. The voltage command value Sv commands an amount of electric power generated by the alternator 35, and is sent to the alternator 35. As a result, the present SOC value C2 is controlled to the target SOC value C1 through fuel electric power generation.

Although not shown in the drawing, the SOC control unit 100 is endowed with a function called "charge control" in addition to the aforementioned function. "Charge control" is a control processing of economizing on the amount of fuel consumption by restraining the battery from being charged through fuel electric power generation during normal running, and charging the battery through regenerative electric power generation during deceleration running. Charge control has a well-known configuration, and hence will not be described in detail, but the following processing is performed in principle. In charge control, the voltage command value calculation unit 140 is caused to calculate the voltage command value Sv during normal running if the target SOC value C1 is larger than the present SOC value C2, and a predetermined electric power generation cutoff voltage is adopted as the voltage command value Sv for the alternator 35 if the target SOC value C1 is equal to or smaller than the present SOC value C2 during normal running. This configuration makes it possible to suppress charge during normal running, and economize on the amount of fuel consumption. Incidentally, "normal running" is a state of the motor vehicle 200 that falls under neither the category of "stoppage" in which the vehicle speed is equal to 0 km/h nor the category of "deceleration running" in which the regenerative electric power generation is carried out.

Owing to the foregoing configuration, the battery 40 is used in a PSOC within a range of, for example, 60 to 90%. Thus, the battery 40, especially the lead storage battery of this embodiment of the invention is desired to be fully charged on a regular basis, due to demands for the prolongation of service life and the enhancement of the accuracy in calculating the SOC. Thus, the SOC control unit 100 outputs a battery charge request Rbt for fully charging the battery 40 at a predetermined start timing, namely, during the start of the motor vehicle 200, and at intervals of a predetermined time (e.g., several hours) since the start of the motor vehicle 200. The execution restriction unit 300 receives the battery charge request Rbt from the SOC control unit 100, and permits and prohibits stop of the engine 10 by the idling stop control unit, thereby controlling the battery 40 to a fully charged state. The foregoing permission and prohibition are carried out on the basis of an idling stop permission/prohibition request Ris and a restart request Reg as will be described later. Incidentally, the SOC control unit 100 defines a period from the foregoing predetermined start timing to an end timing when the SOC of the battery 40 becomes 100%, as "a full charge control section", and continues to transmit the battery charge request Rbt to the execution restriction unit 300 in the full charge control section. In this case, the battery charge request Rbt is a request for full charge as described above. Instead, however, the battery charge request Rbt can also be a request for full charge or a charge state prior to full charge.

The execution restriction unit 300 is equipped with an SOC increase amount determination unit 310, an idling stop permission unit 320, an SOC decrease amount determination unit 330, and an idling stop restart request unit 340. The execution restriction unit 300 performs a processing of permitting and prohibiting stop of the engine 10 by the idling stop control unit through the actions of the respective units 310 to 340. This processing will be referred to hereinafter as "an idling stop execution restriction processing", and will be described in detail subsequently.

A3. Configuration of Control Processing:

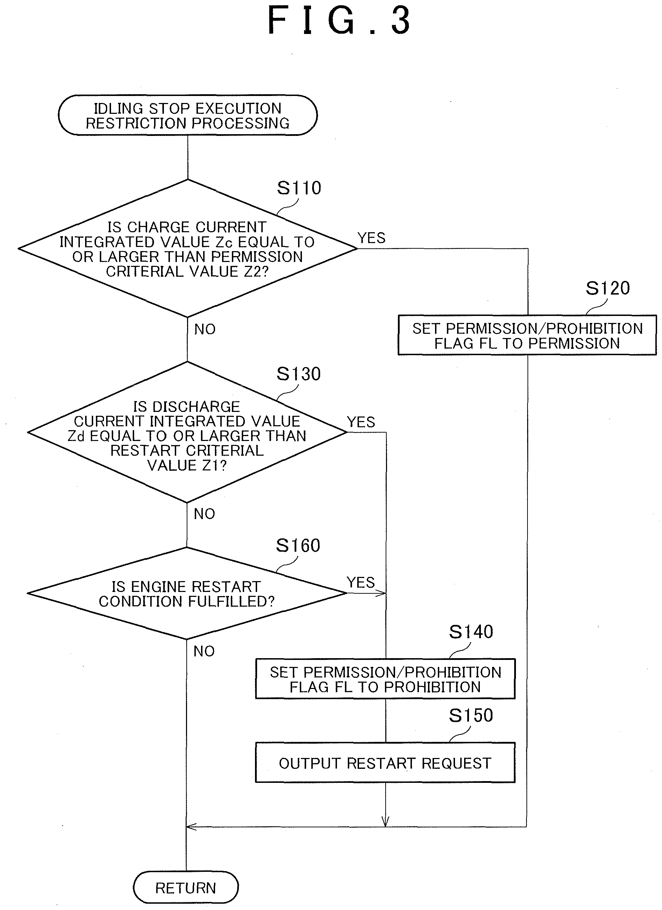

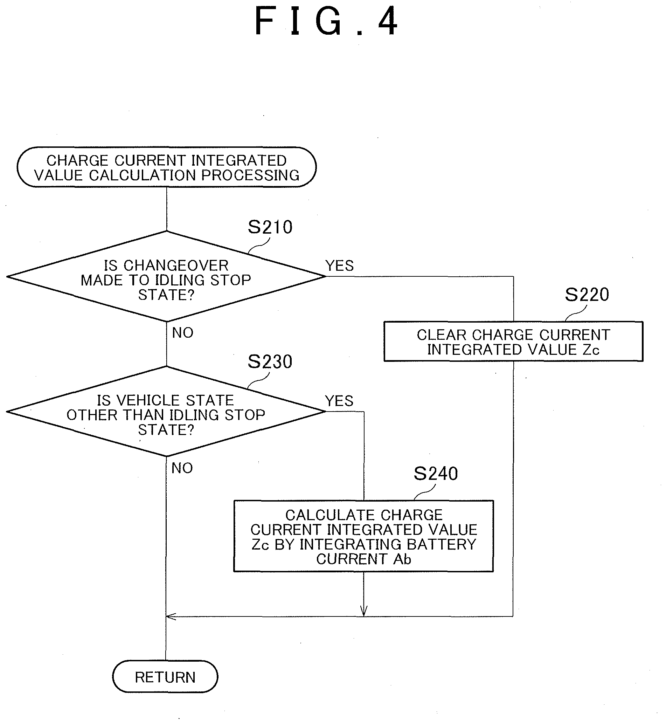

FIG. 3 is a flowchart showing the idling stop execution restriction processing performed by the ECU 50. This idling stop execution restriction processing is repeatedly performed on a predetermined cycle (e.g., at intervals of 1000 milliseconds) when the battery charge request Rbt is received from the SOC control unit 100. As shown in the drawing, if the processing is started, the CPU of the ECU 50 first determines whether or not a charge current integrated value Zc is equal to or larger than an idling stop permission criterial value Z2 (step S110). The charge current integrated value Zc is an integrated value of the charge current of the battery 40, and is obtained by a charge current integrated value calculation processing of FIG. 4.

The charge current integrated value calculation processing shown in FIG. 4 is repeatedly performed when the battery charge request Rbt is received from the SOC control unit 100. As shown in the drawing, if the processing is started, the CPU of the ECU 50 first determines whether or not a changeover is made from an operating state of the engine 10 to an idling stop state (step S210). If it is determined herein that the changeover is made to the idling stop state, the CPU clears the charge current integrated value Zc as a variant (step S220), and temporarily ends this charge current integrated value calculation processing.

On the other hand, if it is determined in step S210 that the changeover is not made to the idling stop state, the CPU determines whether or not a vehicle state of the motor vehicle 200 is other than the idling stop state (step S230). If it is determined herein that the vehicle state is other than the idling stop state, the CPU integrates the battery current Ab to calculate the charge current integrated value Zc (step S240). If the vehicle state is other than the idling stop state, the battery 40 is charged, and the battery current Ab is positive. Therefore, the charge current integrated value Zc is obtained by integrating the battery current Ab. Incidentally, the charge current integrated value Z is temporarily cleared by step S220 during the changeover to the idling stop state, and hence is an integrated value originating in the time of the changeover to the idling stop state. If a negative determination is made after the execution of step S240 or in step S230, the CPU temporarily ends this charge current integrated value calculation processing.

Returning to FIG. 3, in step S110, the CPU compares the latest charge current integrated value Zc obtained by the charge current integrated value calculation processing with the idling stop permission criterial value Z2. In the process of this step S110, the CPU functions as the SOC increase amount determination unit 310 of FIG. 2. The charge current integrated value Zc is equivalent to "the SOC increase amount" mentioned in the application example 2, and the idling stop permission criterial value (hereinafter referred to simply as "a permission criterial value") Z2 is equivalent to "the second predetermined value" mentioned in the application example 2. Incidentally, in this embodiment of the invention, the permission criterial value Z2 is a fixed value, and is a value that is determined in advance assuming a stoppage time for each time and a consumption current of the vehicle for each time.

If it is determined in step S110 that the charge current integrated value Zc is equal to or larger than the permission criterial value Z2, the CPU sets a permission/prohibition flag FL to a permission state (step S120). The permission/prohibition flag FL is a flag for permitting and prohibiting the stop of the engine by the idling stop control unit 90, and is equivalent to the idling stop permission/prohibition request Reg in FIG. 2. If the permission/prohibition flag FL is in the permission state, the idling stop control unit 90 stops the engine 10 upon fulfillment of the engine stop condition. If the permission/prohibition flag FL is in the permission state and the engine stop condition is unfulfilled, the idling stop control unit 90 continues the operation of the engine 10. In the process of this step S120, the CPU functions as the idling stop permission unit 320 of FIG. 2. After the execution of step S120, this idling stop execution restriction processing is temporarily ended.

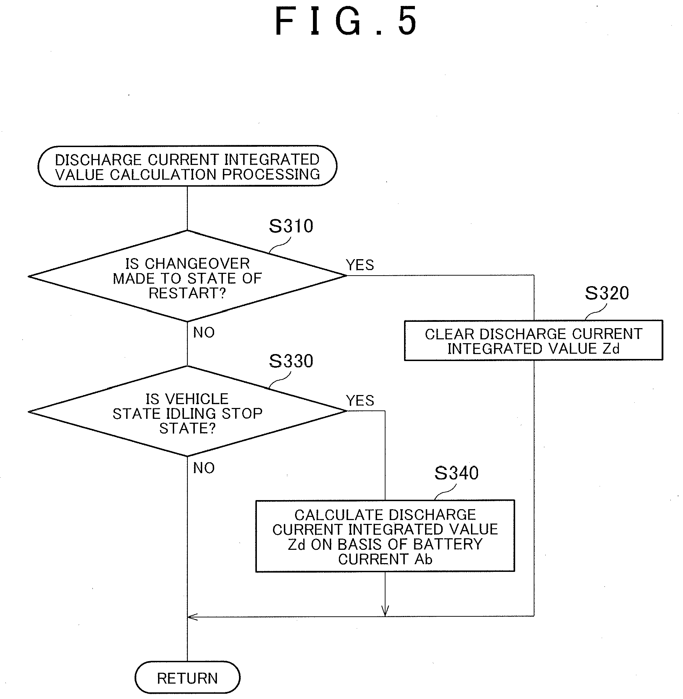

On the other hand, if it is determined in step S110 that the charge current integrated value Zc is not equal to or larger than the stop permission criterial value Z2, the processing is advanced to step S130 to determine whether or not the discharge current integrated value Zd is equal to or larger than the restart criterial value Z1. The discharge current integrated value Zd is an integrated value of the discharge current of the battery 40, and is obtained by a discharge current integrated value calculation processing of FIG. 5.

The discharge current integrated value calculation processing shown in FIG. 5 is repeatedly performed when the battery charge request Rbt is received from the SOC control unit 100. As shown in the drawing, if the processing is started, the CPU of the ECU 50 first determines whether or not a changeover is made from the idling stop state to a state of restart of the engine 10 (step S310). If it is determined herein that a changeover is made to the state of restart, namely, that the engine is restarted, the CPU clears the discharge current integrated value Zd as a variable (step S320), and temporarily ends this discharge current integrated value calculation processing.

On the other hand, if it is determined in step S310 that the engine is not restarted, the CPU determines whether or not the vehicle state of the motor vehicle 200 is the idling stop state (step S330). If it is determined herein that the vehicle state of the motor vehicle 200 is the idling stop state, the CPU integrates the battery current Ab, and calculates the discharge current integrated value Zd (step S340). In the idling stop state, the battery 40 is discharged, and the battery current Ab is either negative or zero. Therefore, the discharge current integrated value Zd is obtained by integrating the battery current Ab. The discharge current integrated value Zd is a total of negative values, and is indicated by an absolute value thereof. Incidentally, the discharge current integrated value Z is temporarily cleared by step S320 at the time of restart, and hence is an integrated value originating in the time of restart. If a negative determination is made in step S330, or after step S340 is executed, the CPU temporarily ends this discharge current integrated value calculation processing.

Incidentally, the battery current sensor 88 and the configuration of the charge current/discharge current integrated value calculation processing shown in FIG. 4 and FIG. 5 are equivalent to "the SOC change amount detection unit" mentioned in the section of "Means for Solving the Problem". Incidentally, as is the case with the battery SOC calculation unit 120, the SOC change amount detection unit is not absolutely required to calculate the amount of change in SOC on the basis of the battery current detected by the battery current sensor 88, but may be configured to obtain the amount of change in SOC on the basis of a battery electrolyte specific gravity sensor, a cell voltage sensor, a battery terminal voltage sensor or the like. Furthermore, the SOC change amount detection unit is not absolutely required to be configured to obtain an amount of the electricity remaining in the battery, but can obtain a state of charge using another parameter, for example, a possible charge amount or the like.

Returning to FIG. 3, in step S130, the CPU compares the latest discharge current integrated value Zd obtained by the discharge current integrated value calculation processing with the restart criterial value Z1. In the process of this step S130, the CPU functions as the SOC decrease amount determination unit 330 of FIG. 2. The discharge current integrated value Zd is equivalent to "the SOC decrease amount" mentioned in the application example 2, and the restart criterial value Z1 is equivalent to "the first predetermined value" mentioned in the application example 2. Incidentally, in this embodiment of the invention, the restart criterial value Z1 is a fixed value, and is a value that is determined in advance in consideration of a time from one stoppage to the next stoppage (hereinafter referred to also as "a running time for each time") and a charge acceptability of the battery 40. Besides, the foregoing permission criterial value Z2 is designated as a value larger than the restart criterial value Z1.

If it is determined in step S130 that the discharge current integrated value Zd is equal to or larger than the restart criterial value Z1, the CPU sets the permission/prohibition flag FL to a prohibition state (step S140), and outputs a restart request Reg (FIG. 2) to cause the engine 10 to be restarted to the idling stop control unit 90 (step S150). In the processes of this step S140 and this step S150, the CPU functions as the idling stop restart request unit 340 of FIG. 2. After executing step S150, the CPU temporarily ends this idling stop execution restriction processing.

On the other hand, if it is determined in step S130 that the discharge current integrated value Zd is not equal to or larger than the restart criterial value Z1, the CPU determines whether or not an engine restart condition in idling stop control is fulfilled (step S160). If it is determined that the engine restart condition is fulfilled, the processing is advanced to step S140. Incidentally, if it is determined in step S160 that the engine restart condition is not fulfilled, the CPU immediately ends this idling stop execution restriction processing temporarily without executing steps S140 and S150.

A4. Operation, Effect:

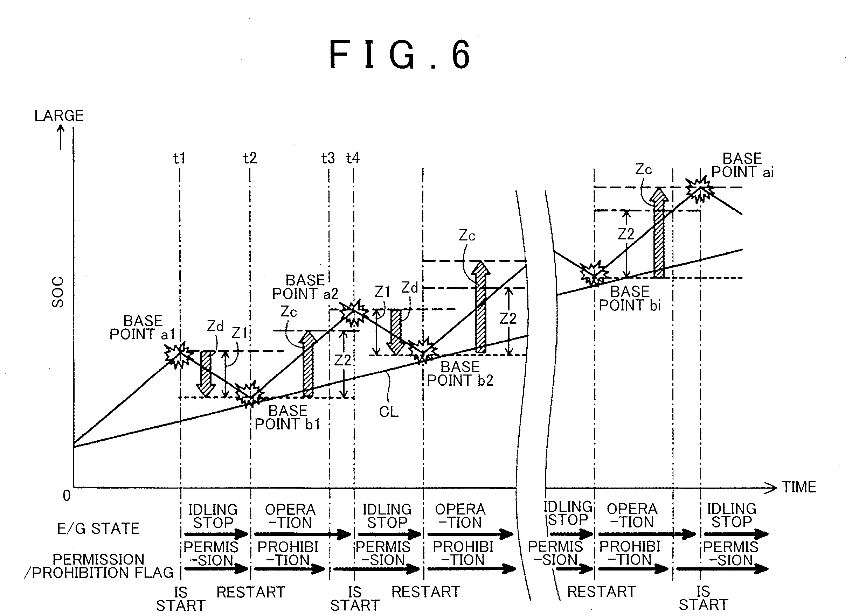

FIG. 6 is an illustrative view showing a time chart about the SOC in this embodiment of the invention. This time chart shows how the SOC of the battery 40 changes when the battery charge request Rbt is made. In this time chart, the axis of ordinate represents SOC, and the axis of abscissa represents time. If the motor vehicle 200 stops from a running state with the battery charge request Rbt made (at a time point t1), the engine stop condition is fulfilled, so that the engine 10 stops (assumes the idling stop state). In the drawing, each time point when a transition to this idling stop state is made is marked with "IS START". If it is assumed that the value of the SOC at this time point t1 is a base point a1, an amount of change in SOC with the lapse of time from the base point a1 (an amount of decrease in SOC because the engine is in the idling stop state) is obtained as the discharge current integrated value Zd. Then, when the discharge current integrated value Zd becomes equal to or larger than the restart criterial value Z1 (at a time point t2), the engine 10 is restarted to be changed over to an operating state.

When the engine 10 is in the operating state, the alternator 35 that has received the motive power of the engine generates electric power, and the SOC starts rising and gradually increases. If it is assumed that the value of the SOC at the time point t2 when the engine 10 is restarted is a base point b1, an amount of change in SOC with the lapse of time from the base point b1 (an amount of increase in SOC because the engine is in operation) is obtained as the charge current integrated value Zc. The permission/prohibition flag FL is in the prohibition state at and after the base point b1. Even if the engine stop condition is fulfilled when the charge current integrated value Zc is smaller than the idling stop permission criterial value Z2, the engine 10 is not stopped. After that, if the charge current integrated value Zc becomes equal to or larger than the idling stop permission criterial value Z2 (at a time point t3), the permission/prohibition flag FL assumes the permission state. If the engine stop condition is fulfilled (at a time point t4) after the time t3, the engine 10 is stopped (assumes the idling stop state).

In this manner, when the battery charge request Rbt is made, the motor vehicle 200 is driven while the aforementioned engine 10 is repeatedly stopped and restarted. That is, as shown in the drawing, when the battery charge request Rbt is made, the motor vehicle 200 is driven while the engine 10 makes a changeover in state between the idling stop state and the operating state at the base point a1, the base point b1, the base point a2, the base point b2, ..., a base point ai, a base point bi (i denotes a positive number), ... At this time, since the permission criterial value Z2 is designated as a value larger, than the restart criterial value Z1 as described above, the SOC of the battery 40 gradually rises as a whole. As a result, when the battery charge request Rbt is made, the battery 40 makes a transition to a tendency to be charged (a tendency to increase the SOC) as a whole. That is, the SOC increases along a line CL in the drawing.

Accordingly, in this embodiment of the invention, engine stop by idling stop control is appropriately carried out even when there is a battery charge request. As a result, a request to fully charge the battery 40 and a request to execute idling stop can be made compatible with each other.

B. Second Embodiment:

In the first embodiment of the invention, the restart criterial value Z1 and the permission criterial value Z2 are fixed values. However, in the second embodiment of the invention, the restart criterial value Z1 and the permission criterial value Z2 change in accordance with the state of a host vehicle and the running environment. This second embodiment of the invention will be described hereinafter.

A motor vehicle as the second embodiment of the invention is equipped with a hardware configuration substantially identical to that of the motor vehicle 200 as the first embodiment of the invention. The hardware of the second embodiment of the invention is different from the hardware of the first embodiment of the invention in that a larger number of various sensors are prepared in the former than in the latter. These various sensors will be described later. A functional configuration that is realized by an ECU in the second embodiment of the invention is different from that of the first embodiment of the invention.

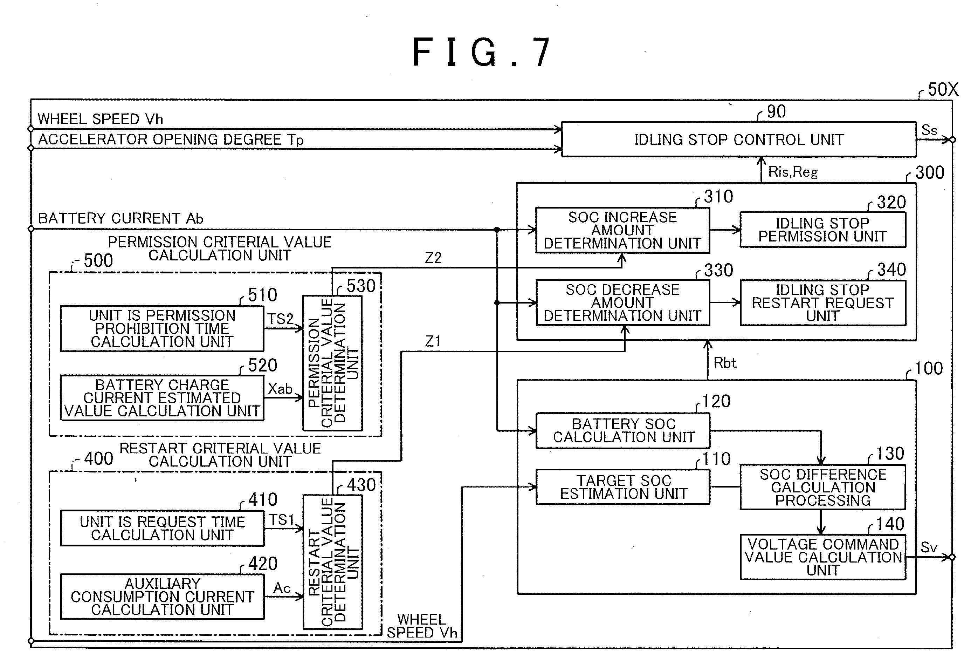

FIG. 7 is an illustrative view showing a functional configuration of an ECU 50X of the second embodiment of the invention. The ECU 50X in the second embodiment of the invention is different from the ECU 50 in the first embodiment of the invention in that a restart criterial value calculation unit 400 and a permission criterial value calculation unit 500 are added. The second embodiment of the invention is identical in other configurational details to the first embodiment of the invention shown in FIG. 2. Therefore, those components which are the same as in the first embodiment of the invention are denoted in FIG. 7 by the same reference symbols as in FIG. 2 respectively, and the description thereof is omitted.

The restart criterial value calculation unit 400 calculates the restart criterial value Z1 in accordance with the state of the host vehicle and the running environment, and is equipped with a first time calculation unit 410, an auxiliary consumption current calculation unit 420, and a restart criterial value determination unit 430. Although the details of the respective units 410 to 430 will be described later, the restart criterial value Z1 acquired in the restart criterial value determination unit 430 is sent to the SOC decrease amount determination unit 330.

The permission criterial value calculation unit 500 calculates the permission criterial value Z2 in accordance with the state of the host vehicle and the running environment, and is equipped with a second time calculation unit 510, a battery charge current estimated value calculation unit 520, and a permission criterial value determination unit 530. Although the details of the respective units 510 to 530 will be described later, the permission criterial value Z2 acquired in the permission criterial value determination unit 530 is sent to the SOC increase amount determination unit 310.

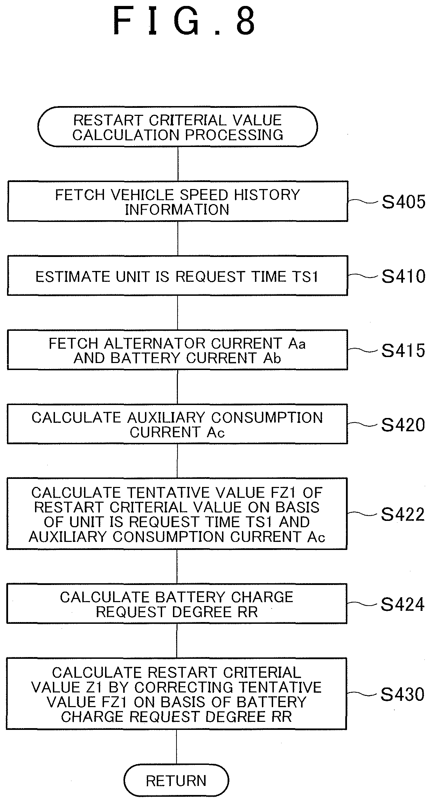

FIG. 8 is a flowchart showing a restart criterial value calculation processing that is performed by the ECU 50X. In this restart criterial value calculation processing, the CPU of the ECU 50X functions as the restart criterial value calculation unit 400 of FIG. 7. This restart criterial value calculation processing is repeatedly performed on a predetermined cycle (e.g., at intervals of 1000 milliseconds) except during the idling stop period.

As shown in the drawing, if the processing is started, the CPU of the ECU 50 first performs a process of fetching vehicle speed history information (step S405). The vehicle speed history information is information on the history of the wheel speed Vh detected by the wheel speed sensor 82. Subsequently, the CPU estimates an IS request time for each time (hereinafter referred to as "a unit IS request time") TS1 requested of idling stop control, on the basis of the vehicle speed history information (step S410). The unit IS request time is equivalent to the length of the idling stop period.

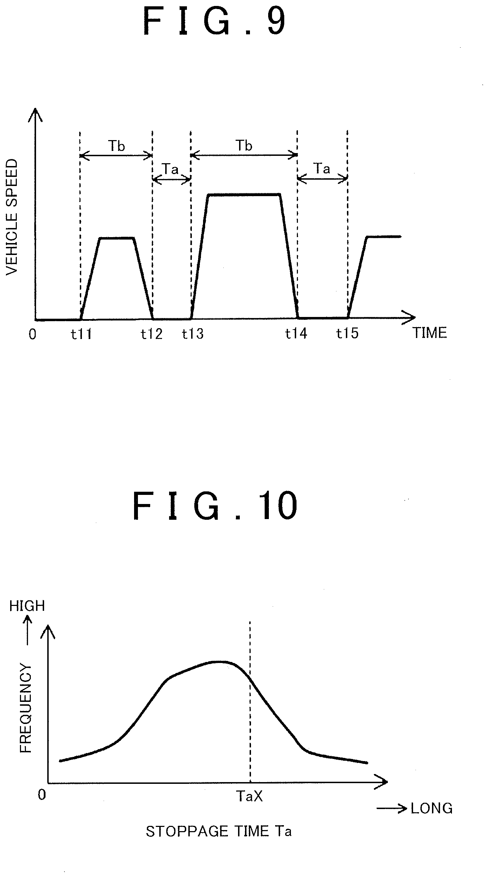

FIG. 9 is an illustrative view showing a time chart about the vehicle speed. In this chart, the axis of ordinate represents vehicle speed, and the axis of abscissa represents time. As shown in the drawing, the vehicle repeats the movements of taking off (at a time point t11, a time point t13, and a time point t15), running, and stopping (at a time point t12 and a time point t14). The time from the time point t12 to the time point t13 or the time from the time point t14 to the time point t15 is a so-called stoppage time Ta. In step S410, first of all, the stoppage time Ta of the motor vehicle 200 in the past is checked on the basis of the vehicle speed history information. Subsequently, a histogram of this stoppage time Ta is taken.

FIG. 10 is an illustrative view showing the histogram of the stoppage time Ta. In this histogram, the axis of abscissa represents the stoppage time Ta, and the axis of ordinate represents the frequency of occurrence of the stoppage time Ta. In step S410, the histogram shown in the drawing is created, and a stoppage time TaX at the time when the sum of the frequencies of occurrence is equal to a predetermined ratio (e.g., 70%) is obtained. In step S410, this stoppage time TaX is stored as the unit request time TS1. This stored unit IS request time TS1 is an estimated result.

In the processes of steps S405 and S410, the CPU of the ECU 50X functions as the first time calculation unit 410 of FIG. 7. The unit IS request time TS1 is equivalent to "the first time" in the application example 3. Incidentally, although this embodiment of the invention adopts a configuration of estimating the unit IS request time TS1 from the vehicle speed history, the invention is not limited to this configuration. For example, it is also acceptable to adopt a configuration of estimating the unit IS request time TS1 from running environment information that is acquired from a navigation system or information on infrastructure. That is, there is adopted a configuration of estimating the unit IS request time TS1 on the basis of information on the stoppage time at a traffic light, a railway crossing or the like as the next opportunity to stop the vehicle. Alternatively, it is also acceptable to adopt a configuration of estimating the unit IS request time TS 1 from information on a dial that is manipulated by the driver. That is, there is adopted a configuration in which a dial for setting the stoppage time, which is manipulated by the driver, is provided on an instrument panel (not shown) of the motor vehicle 200 to estimate the unit IS request time TS1 in accordance with the manipulation amount of the dial.

As shown in FIG. 8, after executing step S410, the CPU fetches an alternator current Aa detected by the alternator current sensor 89, and a battery current Ab detected by the battery current sensor 88 (step S415). After that, the CPU calculates a current Ac flowing to a connecting wire LN (see FIG. 1) side, on the basis of the alternator current Aa and the battery current Ab (step S240). More specifically, the current Ac is obtained on the basis of an expression (1) shown below.

$$Ac = Aa - Ab \ ... \ (1)$$

The current Ac flowing to the connecting wire LN side is a current that is consumed by the auxiliary group 70 and the ECU 50, and will be referred to hereinafter as "an auxiliary consumption current". In the process of step S420, the CPU of the ECU 50X functions as the auxiliary consumption current calculation unit 420 of FIG. 7.

Returning to FIG. 8, after executing step S420, the CPU obtains a tentative value FZ1 of the restart criterial value Z1 on the basis of the unit IS request time TS1 obtained by step S410 and the auxiliary consumption current Ac obtained by step S420 (step S422). The tentative value FZ1 is obtained on the basis of an expression (2) shown below.

$$FZ1 = Ac \times TS1 \ ... \ (2)$$

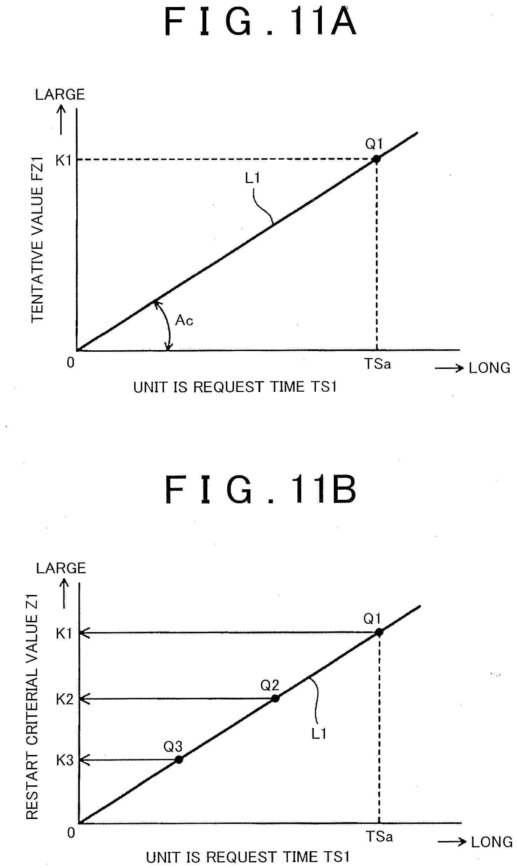

FIG. 11A is a graph showing a relationship among the unit IS request time TS1, the auxiliary consumption current Ac, and the tentative value FZ1 of the restart criterial value Z1. In the graph of the drawing, the axis of abscissa represents the unit IS request time TS1, and the axis of ordinate represents the tentative value FZ1. A line L1 indicates a relationship between the unit IS request time TS1 and the tentative value FZ1, and the gradient of the line L1 is equivalent to the auxiliary consumption current Ac. The tentative value FZ1 is a value corresponding to the unit IS request time TS1 on the line L1 whose gradient from an origin (0, 0) is the auxiliary consumption current Ac. If it is assumed that the unit IS request time TS1 obtained by step S410 is, for example, a value TSa, a point Q1 corresponding to the value TSa on the line L1 is determined, so that a coordinate value K1 of the point Q1 on the axis of ordinate at this time is the tentative value FZ1.

Returning to FIG. 8, after executing step S420, the CPU calculates a battery charge request degree RR (step S424). The battery charge request degree indicates a degree of a tendency to be charged at the time when the battery charge request Rbt is made. Next, it will be described in detail how to calculate the battery charge request degree RR.

The battery charge request Rbt needs to be made in the following cases (i) to (iii).

(i) Determination of SOC in Logic of Estimating SOC through Integration of Battery Current:

There is an error in the battery current sensor 88. Therefore, an attempt to estimate the SOC through integration of the current over a long period of time leads to the accumulation of errors, and causes a great discrepancy between the actual SOC and the estimated SOC. In order to remove this discrepancy, the battery charge request Rbt needs to be made with a view to charging the battery to a fully charged state.

Accordingly, it is concluded that the length of a continuous SOC estimation time through integration of the current and the battery charge request degree are correlated with each other as shown below in Table 1.

[Table 1]

| Continuous SOC Estimation Time through Integration of Current | Short | Intermediate | Long |
|---|---|---|---|
| Battery Charge Request Degree | Zero | Low | High |

(ii) Removal of Stratification:

The repetition of charge/discharge in a stratified state leads to a deterioration in charge/discharge characteristics and a reduction in service life. In order to remove stratification, it is useful to remove stratification through overcharge and gushing. Thus, if stratification is detected, the battery charge request Rbt needs to be made.

Accordingly, it is concluded that the degree of stratification and the battery charge request degree are correlated with each other as shown below in Table 2.

[Table 2]

| Stratification | Zero | Small | Large |
|---|---|---|---|
| Battery Charge Request Degree | Zero | Low | High |

(iii) Recovery from Deterioration:

In idling stop control, the engine 10 needs to be guaranteed to be started. In a state where the battery 40 has deteriorated, the startability of the engine 10 decreases. Therefore, it is useful to fully charge the battery and thus recover the battery performance. Thus, if a deteriorated state of the battery is detected from a battery voltage or the like, the battery charge request degree Rbt needs to be made.

Accordingly, the degree of deterioration and the battery charge request degree are correlated with each other as shown below in Table 3.

[Table 3]

| Deterioration | Small | Intermediate | Large |
|---|---|---|---|
| Battery Charge Request Degree | Zero | Low | High |

In this embodiment of the invention, in consideration of a relationship among Tables 1 to 3, a map showing how the length of the continuous SOC estimation time through the integration of current, the degree of stratification, the degree of deterioration, and the level of the battery charge request degree are correlated with one another is prepared in advance through an experiment or a simulation. In this map, those are indicated by quantified values. Using this map, the battery charge request degree is obtained on the basis of the continuous SOC estimation time through the integration of current, the degree of stratification, and the degree of deterioration, which are quantitatively obtained. Incidentally, instead of the configuration in which the continuous SOC estimation time, the degree of stratification, and the degree of deterioration are all used, it is also acceptable to adopt a configuration of obtaining the battery charge request degree on the basis of one or two of these values. Furthermore, it is also acceptable to adopt a configuration that takes other parameters into account. For example, it is also acceptable to adopt a configuration of calculating the battery charge request degree on the basis of the auxiliary consumption current Ac obtained by step S420, the foregoing continuous SOC estimation time, the foregoing degree of stratification, and the foregoing degree of deterioration.

Returning to FIG. 8, after executing step S424, the CPU performs a process of calculating the restart criterial value Z1 by correcting the tentative value FZ1 of the restart criterial value Z1 obtained by step S422 on the basis of the battery charge request degree RR obtained by step S424 (step S430).

FIG. 11B is an illustrative view showing how to obtain the restart criterial value Z1 from the tentative value FZ1.

A graph similar to the graph of FIG. 11A is depicted in FIG. 11B. If the battery charge request degree RR obtained by step S424 is equal to or smaller than a first threshold, the restart criterial value Z1 at the time when the unit IS request time TS1 = TSa is the tentative value K1 that is obtained from the foregoing Q1. In contrast, if the battery charge request degree RR is larger than the first threshold and equal to or smaller than a second threshold (> the first threshold), a transition of the point on the line L1 is made from Q1 to Q2, so that the restart criterial value Z1 at the time when the unit IS request time TS1 = TSa becomes a value K2 smaller than the value K1. Besides, if the battery charge request degree RR is larger than the second threshold, a transition of the point on the line L1 is made from Q1 to Q3, so that the restart criterial value Z1 at the time when the unit IS request time TS1 = TSa becomes a value K3 smaller than the value K2.

Incidentally, in the processes of steps S422 to S430, the CPU of the ECU 50X functions as the restart criterial value determination unit 430 of FIG. 7. Returning to FIG. 8, after the execution of step S430, this restart criterial value calculation processing is temporarily ended.

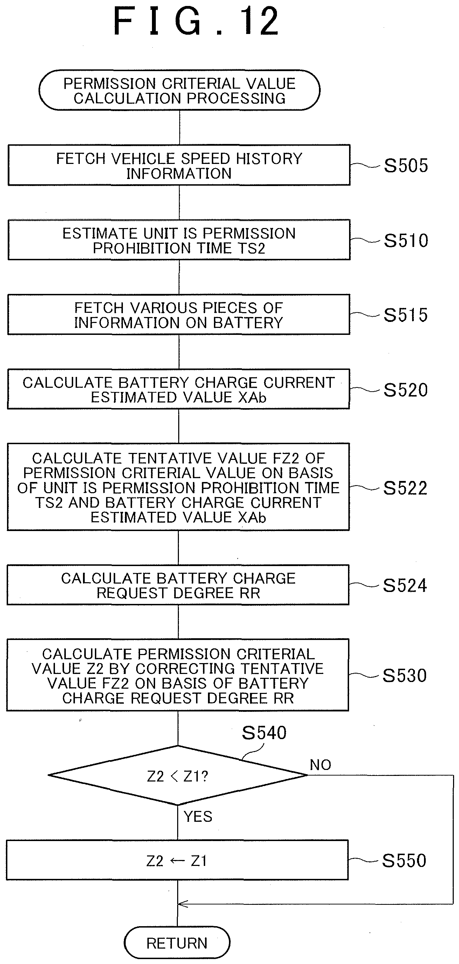

FIG. 12 is a flowchart showing a permission criterial value calculation processing that is performed by the ECU 50X. In this permission criterial value calculation processing, the CPU of the ECU 50X functions as the permission criterial value calculation unit 500 of FIG. 7. This permission criterial value calculation processing is repeatedly performed on a predetermined cycle (e.g., at intervals of 1000 milliseconds) during the idling stop period.

As shown in the drawing, if the processing is started, the CPU of the ECU 50 first performs a process of fetching the vehicle speed history information (step S505). This process is the same as the process of step S405 of FIG. 8. Subsequently, the CPU estimates an IS permission prohibition time for each time (hereinafter referred to as "a unit IS permission prohibition time") TS2 that is permitted in idling stop control, on the basis of information on the vehicle speed history (step S510). The unit IS permission prohibition time TS2 is a time in which the engine is prohibited from being stopped on the engine stop condition after restart of the engine, as permitted in idling stop control. More specifically, in step S510, the CPU performs the following process.

In FIG. 9, a time from the time point t11 to the time point t12, or a time from the time point t13 to the time point t14 is the continuous running time Tb. In step S410, first of all, the continuous running time Tb of the motor vehicle 200 in the past is checked on the basis of information on the vehicle speed history. Subsequently, a histogram of this continuous running time Tb is taken.

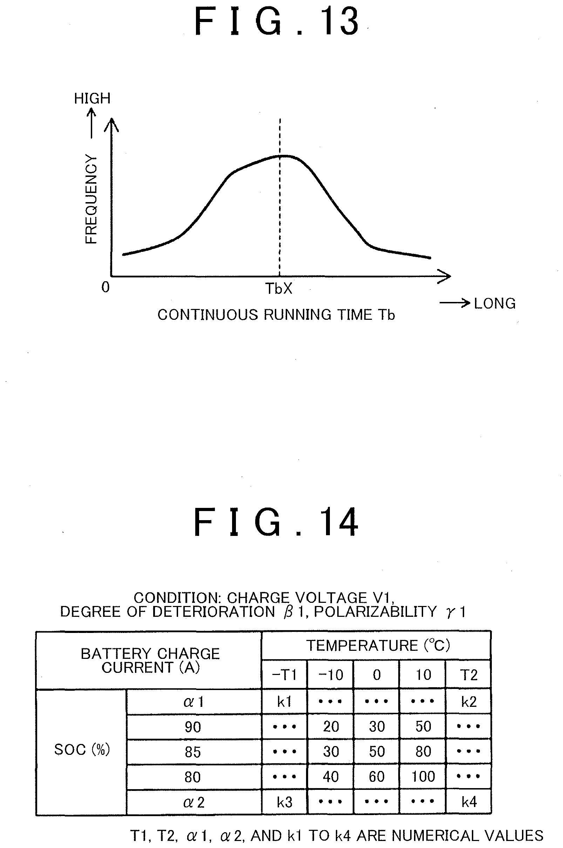

FIG. 13 is an illustrative view showing the histogram of the continuous running time Tb. In this histogram, the axis of abscissa represents the continuous running time Tb, and the axis of ordinate represents the frequency of occurrence of the continuous running time Tb. In step S510, the histogram of FIG. 13 is created to obtain a continuous running time TbX at the time when the sum of frequencies of occurrence is a predetermined ratio (e.g., 60%). In step S510, this continuous running time TbX is stored as the unit IS permission prohibition time TS2. This stored unit IS permission prohibition time TS2 is an estimated result.

In the processes of steps S505 and S510, the CPU of the ECU 50X functions as the second time calculation unit 510 of FIG. 7. The unit IS permission prohibition time TS2 is equivalent to "the second time" in the application example 3. Incidentally, although this embodiment of the invention adopts a configuration of estimating the unit IS permission prohibition time TS2 from the vehicle speed history, the invention is not limited to this configuration. For example, it is also acceptable to adopt a configuration of estimating the unit IS permission prohibition time TS2 from running environment information that is acquired from a navigation system or infrastructure information. That is, there is adopted a configuration of estimating the unit IS permission prohibition time TS2 on the basis of a distance from a spot at the time of restart to a traffic light, a railway crossing or the like as the next opportunity to stop the vehicle, and an average vehicle speed therebetween. Alternatively, it is also acceptable to adopt a configuration of estimating the unit IS permission prohibition time TS2 from information on a dial that is manipulated by the driver. That is, there is adopted a configuration in which a dial for setting a continuous running time, which is manipulated by the driver, is provided on the instrument panel (not shown) of the motor vehicle 200 to estimate the unit IS permission prohibition time TS2 in accordance with the amount of manipulation of the dial.

As shown in FIG. 12, after executing step S510, the CPU fetches various pieces of information on the battery 40 (step S515), and calculates the battery charge current estimated value XAb on the basis of the various pieces of information (step S520). The various pieces of information are pieces of information on factors that influence the charge acceptability of the battery 40. The temperature, the SOC, the degree of deterioration, the discharge polarizability, the charge polarizability and the like fall under the category of such information. These various pieces of information are detected using various sensors provided around the battery 40 and other sensors. Qualitatively, there is a relationship shown below in Table 4, between the charge acceptability (i.e., the battery charge current) and the various pieces of information.

[Table 4]

| Charge Acceptability (Battery Charge Current) | Low | High |
|---|---|---|
| Temperature | Low | High |
| SOC | High | Low |
| Degree of Deterioration | High | Low |
| Discharge Polarizability | Low | High |
| Charge Polarizability | High | Low |

In this embodiment of the invention, the temperature, the SOC, the degree of deterioration, the discharge polarizability, and the charge polarizability are quantitatively grasped, and a battery charge current corresponding to each combination of the respective values is obtained through an experiment or a simulation to create a map in advance. The battery charge current indicates an amount of charge per unit time.

FIG. 14 is an illustrative view showing an example of numerical values in the aforementioned map. The one shown in the drawing is an example of a map showing the battery charge current corresponding to the SOC and the temperature at the time when the charge voltage is V1, the degree of deterioration is a predetermined value $\alpha1$, the discharge polarizability is a predetermined value $\beta1$, and the charge polarizability is $\gamma1$. In step S520, actually measured values that are fetched in step S515 are collated with this map, so that the battery charge current corresponding to the temperature, the SOC, the degree of deterioration, the discharge polarizability, and the charge polarizability can be obtained as an estimated value (a battery charge current estimated value) XAb. In the process of step S520, the CPU of the ECU 50X functions as the battery charge current estimated value calculation unit 520 of FIG. 7.

Returning to FIG. 12, after executing step S520, the CPU obtains a tentative value FZ2 of the permission criterial value Z2 on the basis of the unit IS permission prohibition time TS2 obtained by step S510 and the battery charge current estimated value XAb obtained by step S520 (step S522). The tentative value FZ2 is obtained on the basis of an expression (3) shown below.

$$FZ2 = XAb \times TS2 \ ... \ (3)$$

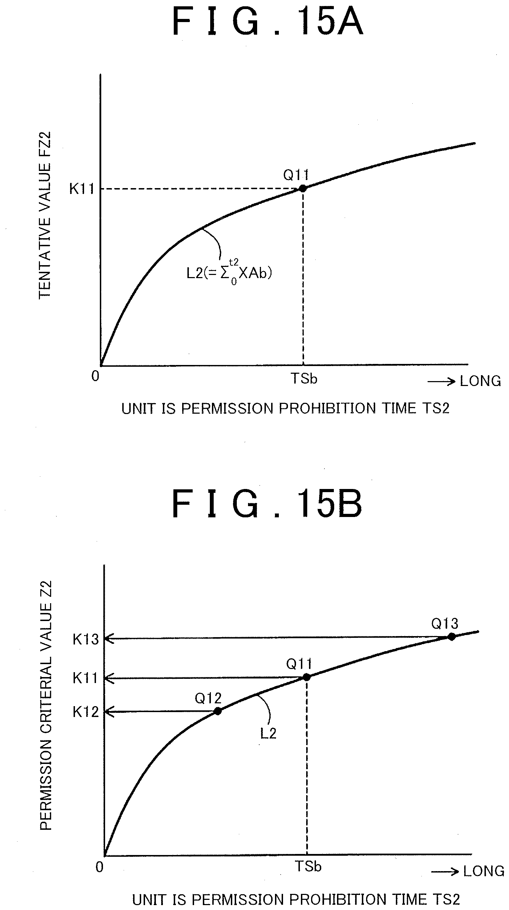

FIG. 15A is a graph showing a relationship among the unit IS permission prohibition time TS2, the integrated value $\Sigma XAb$ about the battery charge current estimated value XAb, and the tentative value FZ2 of the permission criterial value Z2. In the graph shown in the drawing, the axis of abscissa represents the unit IS permission prohibition time TS2, and the axis of ordinate represents the tentative value FZ2. A curve L2 indicates an integrated value that is obtained when the battery charge current estimated value XAb is integrated from the time point 0 to the unit IS permission prohibition time TS2. If it is assumed that the battery charge current estimated value XAb obtained by step S520 is, for example, a value TSb, a point Q11 corresponding to TSb on the line L1 is determined, so that a coordinate value K11 of the point Q11 on the axis of ordinate at this time is the tentative value FZ2.

Returning to FIG. 12, after executing step S522, the CPU calculates the battery charge request degree RR (step S524). The process of step S524 is the same as the process of step S424 of FIG. 8. After executing step S524, the CPU performs a process of calculating the permission criterial value Z2 by correcting the tentative value FZ2 of the permission criterial value Z2 obtained by step S522 on the basis of the battery charge request degree RR obtained by step S524 (step S530).

FIG. 15B is an illustrative view showing how to obtain the permission criterial value Z2 from the tentative value FZ2. In FIG. 15B, a graph similar to the graph of FIG. 15A is depicted. If the battery charge request degree RR obtained by step S424 is larger than a third threshold and equal to or smaller than a fourth threshold (> the third threshold), the permission criterial value Z2 at the time when the unit IS permission prohibition time TS2 = TSb is the tentative value K11 that is obtained from the foregoing Q11. In contrast, if the battery charge request degree RR is equal to or smaller than the third threshold, a transition of the point on the curve L2 is made from Q11 to Q12, so that the permission criterial value Z2 at the time when the unit IS permission prohibition time TS2 = TSb becomes a value K12 smaller than the value K11. Besides, if the battery charge request degree RR is larger than the fourth threshold, a transition of the point on the curve L2 is made from Q11 to Q13, so that the permission criterial value Z2 at the time when the unit IS permission prohibition time TS2 = TSb becomes a value K13 larger than the value K11.

Incidentally, in the processes of steps S522 to S530, the CPU of the ECU 50X functions as the permission criterial value determination unit 530 of FIG. 7. After executing step S530, the CPU determines whether or not the permission criterial value Z2 obtained by step S530 is smaller than the restart criterial value Z1 obtained by the last restart criterial value calculation processing (FIG. 8) (step S540). If it is determined herein that the permission criterial value Z2 is smaller than the restart criterial value Z1, the restart criterial value Z1 is substituted for the permission criterial value Z2 (step S550). After executing step S550, the CPU temporarily ends this permission criterial value calculation processing. Besides, if it is determined in step S540 that the permission criterial value Z2 is equal to or larger than the restart criterial value Z1, the CPU temporarily ends this permission criterial value calculation processing without executing step S550. The permission criterial value Z2 is controlled to a value equal to or larger than the last restart criterial value Z1, through the processes of step S540 and step S550.

According to the second embodiment of the invention configured as described above, the first time calculation unit 410 can obtain the unit IS request time TS1 in accordance with the running environment, and the second time calculation unit 510 can obtain the unit IS permission prohibition time TS2 in accordance with the running environment. Besides, the auxiliary consumption current calculation unit 420 can calculate the auxiliary consumption current Ac in accordance with the state of the host vehicle regarding the auxiliary group, and the battery charge current estimated value calculation unit 520 can calculate the battery charge current estimated value XAb in accordance with the state of the host vehicle as the battery charge current. Then, the restart criterial value Z1 can be obtained on the basis of the unit IS request time TS1 and the auxiliary consumption current Ac, and the permission criterial value Z2 can be obtained on the basis of the unit IS permission prohibition time TS and the battery charge current estimated value XAb. Accordingly, in the second embodiment of the invention, the restart criterial value Z1 and the permission criterial value Z2 can be changed in accordance with the state of the host vehicle and the running environment. Thus, according to the motor vehicle of the second embodiment of the invention, a request to fully charge the battery 40 and a request to execute idling stop can be made compatible with each other, while suitably making a changeover between the idling stop state and the operating state in accordance with the state of the host vehicle and the running environment.

Besides, according to the second embodiment of the invention, the restart criterial value Z1 and the permission criterial value Z2 are corrected in accordance with the battery charge request degree RR. Therefore, the timing for restarting the engine and the timing for permitting stop of the engine can be appropriately adjusted. That is, if the battery charge request degree RR is low, the restart criterial value Z1 is controlled to a large side to make it possible to prolong the idling stop period, and the permission criterial value Z2 is controlled to a small side to make it possible to shorten the period in which stop of the engine by idling stop control is prohibited. Accordingly, the driver's request for idling stop, namely, the driver's request to automatically stop the engine at a traffic light or the like is easy to handle.

C. Third Embodiment:

A motor vehicle as the third embodiment of the invention is equipped with the same hardware configuration and the same software configuration as those of the motor vehicle as the second embodiment of the invention. Moreover, the motor vehicle as the third embodiment of the invention is further equipped with the following software configuration. Incidentally, in the third embodiment of the invention, those components which are the same as in the first embodiment of the invention are denoted by the same reference symbols as in the first embodiment of the invention respectively, and will be described as follows.

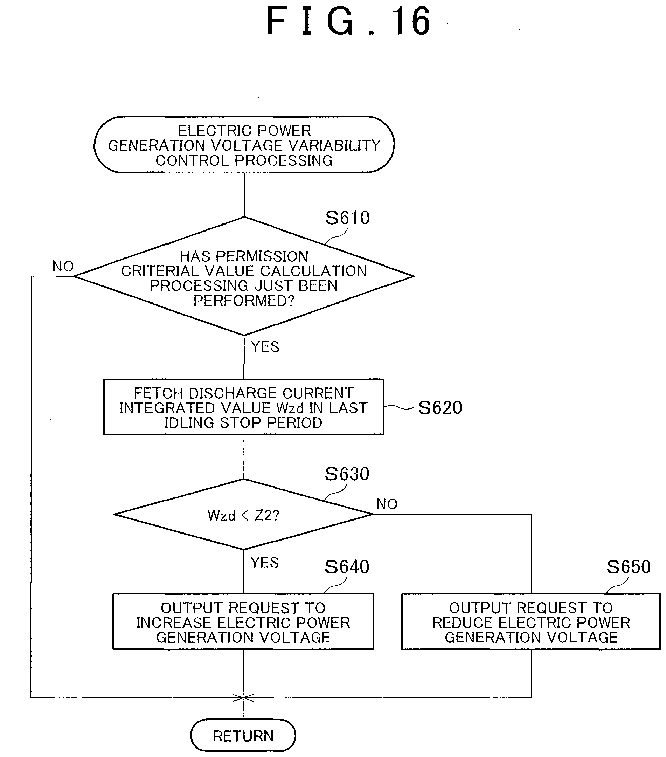

FIG. 16 is a flowchart showing an electric power generation voltage variability control processing. This electric power generation voltage variability control processing is repeatedly performed on a predetermined cycle (e.g., at intervals of 1000 milliseconds) by the ECU when a battery charge request is received. As shown in the drawing, if the processing is started, the CPU of the ECU first determines whether or not the permission criterial value calculation processing shown in FIG. 12 has just been performed (step S610). If it is determined herein that the permission criterial value calculation processing has not just been performed, the CPU makes "a return" to temporarily end this electric power generation voltage variability control processing.

On the other hand, if it is determined by step S610 that the permission criterial value calculation processing has just been performed, the CPU fetches a discharge current integrated value WZd in the last idling stop period (step S620). The discharge current integrated value WZd is an amount of the current that is discharged in the idling stop period when idling stop control is performed last time. More specifically, the final discharge current integrated value Zd (a value that is to be cleared in step S320) that is obtained through the discharge current integrated value calculation processing of FIG. 5 when idling stop control is performed last time is stored into a memory as the discharge current integrated value WZd. This discharge current integrated value WZd is fetched from the memory.

After executing step S620, the CPU determines whether or not the discharge current integrated value WZd is larger than the permission criterial value Z2 obtained by step S530 in the permission criterial value calculation processing of FIG. 12 (step S630). A value that is to be corrected to Z1 is used as the permission criterial value Z2 by steps S540 and S550 when the permission criterial value Z2 is smaller than Z1. If it is determined in step S630 that the discharge current integrated value WZd is larger than the permission criterial value Z2, the CPU outputs an electric power generation voltage increase request (step S640). The electric power generation voltage increase request is a request to enhance the voltage command value Sv that is obtained in the voltage command value calculation unit 140 in FIG. 2. On the other hand, if it is determined in step S630 that the discharge current integrated value WZd is equal to or smaller than the permission criterial value Z2, the CPU outputs an electric power generation voltage reduction request (step S640). The electric power generation voltage reduction request is a request to lower the voltage command value Sv that is obtained in the voltage command value calculation unit 140 in FIG. 2. After executing step S640 or S650, the CPU makes "a return" to temporarily end this electric power generation voltage variability control processing.

In the second embodiment of the invention, the idling stop permission criterial value Z2 is obtained on the basis of the unit IS permission prohibition time TS2 and the battery charge current estimated value XAb. However, if there is a certain relationship between the charge acceptability of the battery 40 and the unit IS permission prohibition time TS2, it may be difficult to acquire an amount of charge that is assumed within the unit IS permission prohibition time TS2. In this case, in the third embodiment of the invention, the electric power generation voltage increase request is output by step S640 through the foregoing electric power generation voltage variability control processing, so that the battery charge current estimated value XAb is increased, and the prohibition period of idling stop control can be shortened. Besides, if the charge acceptability resulting from the battery state of the battery 40 is high, or if the unit IS permission prohibition time TS2 is long and the battery 40 can be sufficiently charged with a charge amount equal to or larger than the last discharge amount within the unit IS permission prohibition time TS2, the battery 40 can be efficiently charged through the outputting of the electric power generation voltage reduction request by step S650. As a result, the fuel electric power generation for charging the battery can be reduced, and fuel economy can be improved.

D. Fourth Embodiment:

A motor vehicle as the fourth embodiment of the invention is equipped with the same hardware configuration and the same software configuration as those of the motor vehicle as the first embodiment of the invention. Moreover, the motor vehicle as the fourth embodiment of the invention is further equipped with the following software configuration. Incidentally, in the fourth embodiment of the invention, those components which are the same as in the first embodiment of the invention are denoted by the same reference symbols as in the first embodiment of the invention respectively, and will be described as follows.

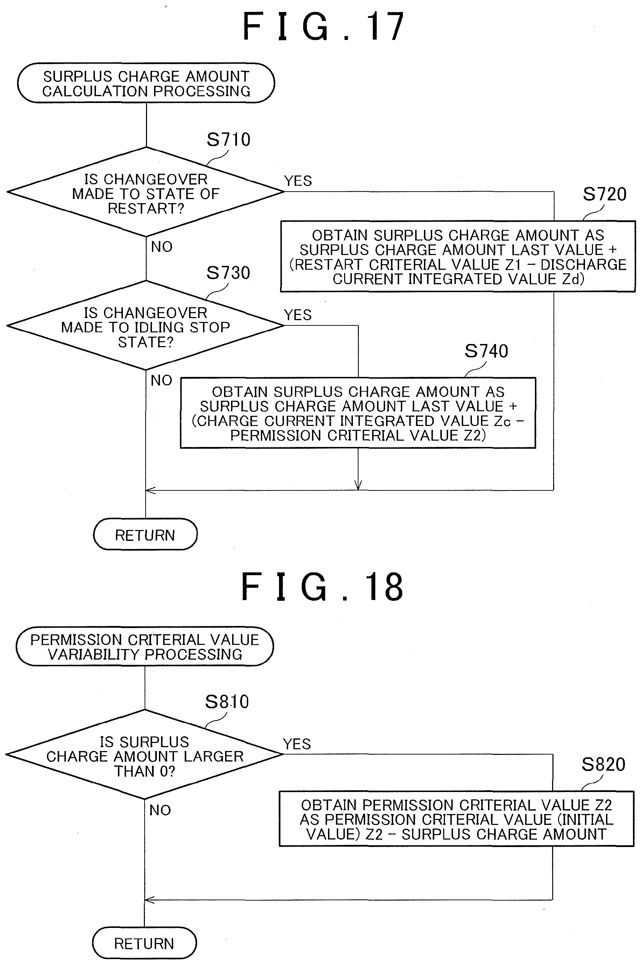

FIG. 17 is a flowchart showing a surplus charge amount calculation processing. This surplus charge amount calculation processing is repeatedly performed on a predetermined cycle (e.g., at intervals of 1000 milliseconds) by the ECU when a battery charge request is received. As shown in the drawing, if the processing is started, the CPU of the ECU first determines whether or not a changeover is made from the idling stop state to the state of restart of the engine 10 (step S710). If it is determined herein that a changeover is made to the state of restart, namely, that the engine is restarted, the CPU performs a process of calculating a surplus charge amount (step S720). More specifically, the CPU performs a calculation process according to an expression (4) shown below.

$$\text{Surplus charge amount} = \text{Surplus charge amount last value} + (\text{Restart criterial value } Z1 - \text{Discharge current integrated value } Zd) \dots (4)$$

It should be noted herein that the discharge current integrated value Zd is a value obtained in the discharge current integrated value calculation processing of FIG. 5, and is a value that is to be cleared in step S320. The restart criterial value Z1 is a fixed value as described in the first embodiment of the invention. According to the expression (4), a difference that is acquired by subtracting the discharge current integrated value Zd from the restart criterial value Z1 is added to the surplus charge amount (hereinafter referred to as "a surplus charge amount last value") acquired during the last performance of this surplus charge amount calculation processing, so that a present surplus charge amount is acquired. After the execution of step S720, "a return" is made to temporarily end this surplus charge amount calculation processing.

On the other hand, if it is determined in step S710 that the engine is not restarted, the CPU of the ECU 50 determines whether or not a changeover is made from the operating state of the engine 10 to the idling stop state (step S730). If it is determined herein that a changeover is made to the idling stop state, the CPU performs a process of calculating a surplus charge amount (step S740). More specifically, the CPU performs a calculation process according to an expression (5) shown below.

$$\text{Surplus charge amount} = \text{Surplus charge amount last value} + (\text{Charge current integrated value } Zc - \text{Permission criterial value } Z2) \dots (5)$$

It should be noted herein that the charge current integrated value Zc is a value obtained in the charge current integrated value calculation processing of FIG. 4, and is a value that is to be cleared in step S220. The permission criterial value Z2 is a fixed value as described in the first embodiment of the invention. According to the expression (5), a difference that is acquired by subtracting the permission criterial value Z2 from the charge current integrated value Zc is added to the surplus charge amount last value, so that a present surplus charge amount is acquired. After the execution of step S740, "a return" is made to temporarily end this surplus charge amount calculation processing. Besides, if it is determined in step S730 that no changeover is made to the idling stop state as well, "a return" is made to temporarily end this surplus charge amount calculation processing.

FIG. 18 is a flowchart showing a permission criterial value variability processing. This permission criterial value variability processing is repeatedly performed on a predetermined cycle (e.g., at intervals of 1000 milliseconds) by the ECU when a battery charge request is received. As shown in the drawing, if the processing is started, the CPU of the ECU first determines whether or not the surplus charge amount obtained by the surplus charge amount calculation processing of FIG. 17 is larger than the value 0 (step S810). If it is determined herein that the surplus charge amount is larger than the value 0, a difference that is acquired by subtracting the surplus charge amount from the permission criterial value Z2 used in the first embodiment of the invention is stored as the new permission criterial value Z2. After the execution of step S820, "a return" is made to temporarily end this permission criterial value variability processing. Besides, if it is determined in step S820 that the surplus charge amount is equal to or smaller than the value 0 as well, "a return" is made to temporarily end this surplus charge amount calculation processing.

In the first embodiment of the invention, as described previously, the battery 40 makes a transition to the tendency to be charged (a tendency to increase the SOC) as a whole when the battery charge request Rbt is made. This is considered to mean that the line CL of FIG. 6 is controlled such that the gradient thereof becomes positive. It should be noted herein that if this line CL is considered to be the target SOC, the actual SOC is much larger than the target SOC in the following two cases.

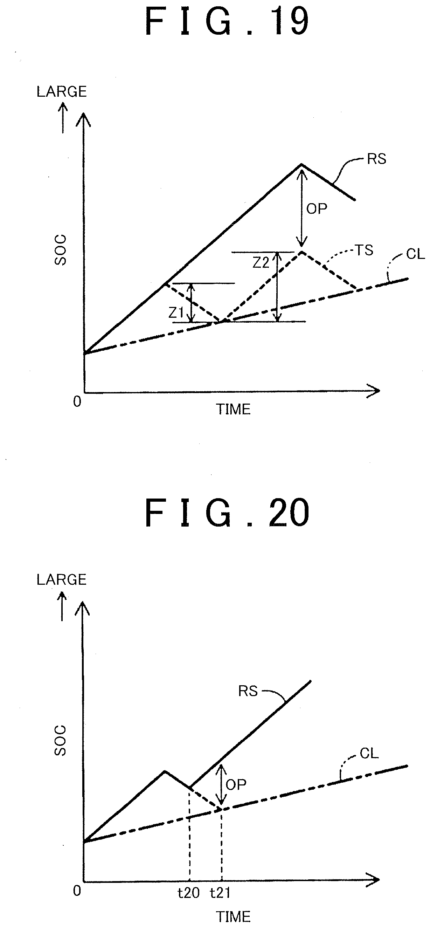

In the first case, the engine stop condition is not fulfilled as expected, and the battery 40 is charged beyond the permission criterial value Z2. FIG. 19 is an illustrative view showing an example of changes in the SOC in the first case. Intrinsically, as indicated by a broken line TS in the drawing, the SOC gradually rises along an alternate long and short dash line CL in the drawing (which is equivalent to CL in FIG. 6) while repeatedly falling in accordance with the restart criterial value Z1 and rising in accordance with the permission criterial value Z2. However, in the first case, the SOC changes as indicated by a solid line RS in the drawing, thus generating a surplus charge amount OP. The change of the broken line TS can be referred to as an SOC transition target change, and the surplus charge amount OP is a difference between the actual SOC and the SOC transition target change.

In the second case, the engine restart condition is fulfilled early, and the actual discharge amount is smaller than the requested charge amount (= the restart criterial value Z1). FIG. 20 is an illustrative view showing an example of changes in SOC in the second case. Intrinsically, the engine is restarted at a time point t21. However, when the engine restart condition is fulfilled early through the operation by the driver (at a time point t20), the engine is restarted even before the time point t21, and the SOC rises as indicated by the solid line RS in the drawing. Accordingly, in the second case, the SOC changes as indicated by the solid line RS, thus generating the surplus charge amount OP. In this case as well, the surplus charge amount OP is a difference between the actual SOC and the SOC transition target change.

The foregoing surplus charge amount calculation processing of FIG. 17 is designed to obtain the surplus charge amount OP exemplified in FIG. 19 and FIG. 20. When this surplus charge amount OP is generated, the permission criterial value Z2 is obtained in consideration of the value corresponding to this surplus charge amount OP, through the permission criterial value variability processing of FIG. 18. In consequence, according to the third embodiment of the invention, the permission criterial value Z2 is lessened by the value corresponding to the surplus charge amount OP, so that the driver's request for idling stop is easy to handle.

Incidentally, this fourth embodiment of the invention is configured to lessen the permission criterial value Z2 by the value corresponding to the surplus charge amount OP, with respect to the first embodiment of the invention. Instead, however, the fourth embodiment of the invention can also be configured to lessen the permission criterial value Z2 by the value corresponding to the surplus charge amount OP, with respect to the second or third embodiment of the invention.

E. Modification Examples:

Incidentally, this invention is not limited to the aforementioned embodiments thereof or the aforementioned modes for carrying out the invention, but can be carried out in various modes without departing from the gist thereof. For example, the invention can also be modified as follows.

Modification Example 1:

In each of the aforementioned embodiments of the invention, the execution restriction unit 300 is configured to operate when the battery charge request Rbt is made. Instead, however, it is also possible to adopt a configuration in which the execution restriction unit 300 constantly operates. This configuration allows the battery to always tend to be charged as a whole.

Modification Example 2:

In the foregoing second embodiment of the invention, both the restart criterial value Z1 and the permission criterial value Z2 change in accordance with the state of the host vehicle and the running environment. Instead, however, it is also acceptable to adopt a configuration in which one of the restart criterial value Z1 and the permission criterial value Z2 changes in accordance with the state of the host vehicle and the running environment and the other is a fixed value.

Modification Example 3:

In each of the aforementioned embodiments of the invention, the battery is a lead storage battery, but should not be limited thereto in the invention. For example, the lead storage battery can also be replaced with another type of battery such as a lithium-ion storage battery, a rocking chair-type storage body or the like. Besides, in each of the aforementioned embodiments of the invention, the vehicle is a motor vehicle. Instead, however, the vehicle may be a vehicle other than a motor vehicle, such as an electric train or the like.

Modification Example 4:

In each of the aforementioned embodiments of the invention, the functions realized by software may be partially realized by hardware (e.g., an integrated circuit), or the functions realized by hardware may be partially realized by software.

Modification Example 5:

Incidentally, among the components in the foregoing embodiments of the invention and the respective modification examples thereof, the components other than those set forth in the independent claims are additional components, which can be omitted as appropriate. For example, it is also possible to dispense with charge control for economizing on the amount of fuel consumption through suppression of the charging of the battery during normal running and charging the battery through regenerative electric power generation during deceleration running.

DESCRIPTION OF REFERENCE SYMBOLS

10 ... ENGINE
15 .... AUTOMATIC TRANSMISSION
20 .... DIFFERENTIAL GEAR
25 .... DRIVING WHEEL
30 .... STARTER
34 .... DRIVE MECHANISM
35 .... ALTERNATOR
40 .... BATTERY
50 .... ECU
70 .... AUXILIARY GROUP
72 .... HEADLIGHT
74 .... AIR-CONDITIONER (A/C)
82 .... WHEEL SPEED SENSOR
84 .... BRAKE PEDAL SENSOR
86 .... ACCELERATOR OPENING DEGREE SENSOR
88 .... BATTERY CURRENT SENSOR
89 .... ALTERNATOR CURRENT SENSOR

90 .... IDLING STOP CONTROL UNIT
100 .... SOC CONTROL UNIT
110 .... TARGET SOC ESTIMATION UNIT
120 .... BATTERY SOC CALCULATION UNIT
130 .... SOC DIFFERENCE CALCULATION UNIT
140 .... VOLTAGE COMMAND VALUE CALCULATION UNIT
200 .... MOTOR VEHICLE
300 .... EXECUTION RESTRICTION UNIT
310 .... SOC INCREASE AMOUNT DETERMINATION UNIT
320 .... IDLING STOP PERMISSION UNIT
330 .... SOC DECREASE AMOUNT DETERMINATION UNIT
340 .... IDLING STOP RESTART REQUEST UNIT
Aa .... ALTERNATOR CURRENT
Ab .... BATTERY CURRENT
Ac .... AUXILIARY CONSUMPTION CURRENT
XAb .... ESTIMATED VALUE OF BATTERY CHARGE CURRENT
Rbt .... BATTERY CHARGE REQUEST
Z1 .... RESTART CRITERIAL VALUE
Z2 .... IDLING STOP PERMISSION CRITERIAL VALUE

**Claims**

1.  A vehicle control apparatus that is mounted in a vehicle having an engine (10), and a battery (40) that is charged by an electric power generator (35) that is driven by a motive power of the engine, the vehicle control apparatus comprising:

    an idling stop control unit (90) that stops the engine;
    an SOC change amount detection unit (88) that detects an amount of change in a state of charge of the battery; and
    an execution restriction unit (300) that permits and prohibits stop of the engine by an idling stop control in accordance with the amount of change in the state of charge, wherein
    the execution restriction unit
    determines timings for the permission and the prohibition such that an amount of increase in the state of charge at a time when the engine is not stopped by the idling stop control becomes larger than an amount of decrease in the SOC at a time when the engine is stopped, in a case where the battery is not fully charged, wherein
    the idling stop control unit stops the engine when a predetermined stop condition is fulfilled, and restarts the engine when a predetermined restart condition is fulfilled during stop of the engine,
    **characterized in that**
    the execution restriction unit includes:

    an idling stop restart request unit (340) that executes the prohibition by restarting the engine when the amount of decrease in the state of charge at the time when the engine is stopped exceeds a first predetermined value; and
    an idling stop permission unit (320) that permits stop of the engine by the idling stop control when the amount of increase in the state of charge at the time when the engine is not stopped exceeds a second predetermined value.

2.  The vehicle control apparatus according to claim 1, further comprising:

    a first time calculation unit (410) that calculates a first time from stop of the engine to restart of the engine as requested of the idling stop control;
    an auxiliary group consumption current calculation unit that calculates an auxiliary group consumption current that is consumed by an auxiliary group that operates with an aid of the state of charge of the battery; and
    a first predetermined value calculation unit that calculates the first predetermined value on a basis of the first time and the auxiliary group consumption current.

3.  The vehicle control apparatus according to claim 2, further comprising:

a battery charge request degree calculation unit that detects a charge request degree of the battery, wherein the battery charge request degree indicates a degree of a tendency of the battery to be charged at a time when a battery charge request is made; and

a first predetermined value correction unit that corrects, the first predetermined value based on the charge request degree.

4. The vehicle control apparatus according to any one of claims 2 to 3, further comprising:

a second time calculation unit that calculates a second time when stop of the engine on the predetermined stop condition after restart of the engine is prohibited, as permitted in the idling stop control;

a charge current estimation unit that estimates a charge current of the battery per unit time; and

a second predetermined value calculation unit that calculates the second predetermined value on a basis of the second time and the charge current.

5. The vehicle control apparatus according to claim 4, further comprising:

a battery charge request degree calculation unit that detects a charge request degree of the battery; and

a second predetermined value correction unit that corrects, the second predetermined value based on the charge request degree of the battery.

6. The vehicle control apparatus according to any one of claims 1 to 5, further comprising:

a surplus charge amount calculation unit that calculates, as a surplus charge amount, a difference between an actual change in the state of charge and a transition target change in the state of charge, the transition target change repeatedly falling in accordance with the first predetermined value and rising in accordance with the second predetermined value; and

a surplus correction unit that corrects the second predetermined value by subtracting the surplus charge amount from the second predetermined value.

7. A vehicle comprising:

an engine (10);

a battery (40) that is charged by an electric power generator (35) that is driven by a motive power of the engine;

an idling stop control unit (90) that stops the engine;

an SOC change amount detection unit (88) that detects an amount of change in a state of charge of the battery;

an execution restriction unit (300) that permits and prohibits stop of the engine by an idling stop control in accordance with the amount of change in the state of charge, wherein

the execution restriction unit determines timings for the permission and the prohibition such that an amount of increase in the state of charge at a time when the engine is not stopped by the idling stop control becomes larger than an amount of decrease in the state of charge at a time when the engine is stopped, in a case where the battery is not fully charged, wherein

the idling stop control unit stops the engine when a predetermined stop condition is fulfilled, and restarts the engine when a predetermined restart condition is fulfilled during stop of the engine,

**characterized in that**

the execution restriction unit includes:

an idling stop restart request unit (340) that executes the prohibition by restarting the engine when the amount of decrease in the state of charge at the time when the engine is stopped exceeds a first predetermined value; and

an idling stop permission unit (320) that permits stop of the engine by the idling stop control when the amount of increase in the state of charge at the time when the engine is not stopped exceeds a second predetermined value.

8. A vehicle control method for controlling a vehicle having an engine (10), and a battery (40) that is charged by an electric power generator (35) that is driven by a motive power of the engine, the vehicle control method comprising:

stopping the engine;

detecting an amount of change in a state of charge of the battery;

permitting and prohibiting stop of the engine by an idling stop control in accordance with the amount of change in the state of charge, and

determining timings for the permission and the prohibition such that an amount of increase in the state of charge at a time when the engine is not stopped by the idling stop control becomes larger than an amount of decrease in the state of charge at a time when the engine is stopped, in a case where the battery is not fully charged, stopping the engine when a predetermined stop condition is fulfilled, and restarts the engine when a predetermined restart condition is fulfilled during stop of the engine,

**characterized by**

executing the prohibition by restarting the engine when the amount of decrease in the state of charge at the time when the engine is stopped exceeds a first predetermined value; and

permitting stop of the engine by the idling stop control when the amount of increase in the state of charge at the time when the engine is not stopped exceeds a second predetermined value.

**Patentansprüche**

1. Fahrzeugsteuerungsvorrichtung, die an einem Fahrzeug mit einer Maschine (10) und einer Batterie (40), die durch einen elektrischen Leistungsgenerator (35), der durch eine Antriebsleistung der Maschine angetrieben wird, geladen wird, angebracht ist, wobei die Fahrzeugsteuerungsvorrichtung aufweist:

   eine Leerlaufstoppsteuerungseinheit (90), die die Maschine stoppt;
   eine SOC-Änderungsbetragserfassungseinheit (88), die einen Betrag einer Änderung eines Ladezustandes der Batterie erfasst; und
   eine Ausführungsbeschränkungseinheit (300), die einen Stopp der Maschine durch eine Leerlaufstoppsteuerung gemäß dem Betrag der Änderung des Ladezustandes erlaubt oder verhindert, wobei
   die Ausführungsbeschränkungseinheit
   Zeitpunkte für das Erlauben und das Verhindern derart bestimmt, dass ein Betrag einer Erhöhung in dem Ladezustand zu einer Zeit, wenn die Maschine durch die Leerlaufstoppsteuerung nicht gestoppt ist, größer wird als ein Betrag einer Verringerung in dem SOC zu einer Zeit, wenn die Maschine gestoppt ist, in einem Fall, in dem die Batterie nicht vollständig geladen ist, wobei
   die Leerlaufstoppsteuerungseinheit die Maschine stoppt, wenn eine vorbestimmte Stoppbedingung erfüllt ist, und die Maschine erneut startet, wenn eine vorbestimmte Neustartbedingung während des Stopps der Maschine erfüllt ist,
   **dadurch gekennzeichnet, dass**
   die Ausführungsbeschränkungseinheit aufweist:

      eine Leerlaufstoppneustartanforderungseinheit (340), die die Verhinderung durch Neustarten der Maschine ausführt, wenn der Betrag einer Verringerung in dem Ladezustand zu der Zeit, wenn die Maschine gestoppt ist, einen ersten vorbestimmten Wert überschreitet; und
      eine Leerlaufstopperlaubniseinheit (320), die einen Stopp der Maschine durch die Leerlaufstoppsteuerung erlaubt, wenn der Betrag einer Erhöhung in dem Ladezustand zu der Zeit, wenn die Maschine nicht gestoppt ist, einen zweiten vorbestimmten Wert überschreitet.

2. Fahrzeugsteuerungsvorrichtung gemäß Anspruch 1, weiterhin mit:

   einer ersten Zeitberechnungseinheit (410), die eine erste Zeit von einem Stopp der Maschine zu einem Neustart der Maschine, die von der Leerlaufstoppsteuerung angefordert ist, berechnet;
   einer Hilfsgruppenverbrauchsstromberechnungseinheit, die einen Hilfsgruppenverbrauchsstrom berechnet, der durch eine Hilfsgruppe verbraucht wird, die mit Hilfe des Ladezustandes der Batterie arbeitet; und
   einer Einheit zum Berechnen eines ersten vorbestimmten Wertes, die den ersten vorbestimmten Wert basierend auf der ersten Zeit und dem Hilfsgruppenverbrauchsstrom berechnet.

3. Fahrzeugsteuerungsvorrichtung gemäß Anspruch 2, weiterhin mit:

   einer Batterieladeanforderungsgradberechnungseinheit, die einen Ladeanforderungsgrad der Batterie erfasst, wobei der Batterieladeanforderungsgrad einen Grad einer Tendenz der Batterie, zu einer Zeit geladen zu werden, wenn eine Batterieladeanforderung vorgenommen wird, angibt; und
   einer Einheit zum Korrigieren des ersten vorbestimmten Wertes, die den ersten vorbestimmten Wert basierend auf dem Ladeanforderungsgrad korrigiert.

4. Fahrzeugsteuerungsvorrichtung gemäß einem der Ansprüche 2 bis 3, weiterhin mit:

einer Einheit zum Berechnen einer zweiten Zeit, die eine zweite Zeit berechnet, wenn ein Stopp der Maschine bezüglich der vorbestimmten Stoppbedingung nach einem Neustart der Maschine verhindert ist, wie es in der Leerlaufstoppsteuerung erlaubt ist;
einer Ladestromschätzeinheit, die einen Ladestrom der Batterie pro Zeiteinheit schätzt; und
einer Einheit zum Berechnen eines zweiten vorbestimmten Wertes, die den zweiten vorbestimmten Wert basierend auf der zweiten Zeit und dem Ladestrom berechnet.

5. Fahrzeugsteuerungsvorrichtung gemäß Anspruch 4, weiterhin mit:

einer Batterieladeanforderungsgradberechnungseinheit, die einen Ladeanforderungsgrad der Batterie erfasst; und
einer Einheit zum Korrigieren eines zweiten vorbestimmten Wertes, der den zweiten vorbestimmten Wert basierend auf dem Ladeanforderungsgrad der Batterie korrigiert.

6. Fahrzeugsteuerungsvorrichtung gemäß einem der Ansprüche 1 bis 5, weiterhin mit:

einer Überschussladebetragsberechnungseinheit, die, als einen Überschussladebetrag, eine Differenz zwischen einer tatsächlichen Änderung in dem Ladezustand und einer Übergangssolländerung in dem Ladezustand berechnet, wobei die Übergangssolländerung wiederholt gemäß dem ersten vorbestimmten Wert fällt und gemäß dem zweiten vorbestimmten Wert steigt; und
einer Überschusskorrektureinheit, die den zweiten vorbestimmten Wert durch Subtrahieren des Überschussladebetrages von dem zweiten vorbestimmten Wert korrigiert.

7. Fahrzeug mit:

einer Maschine (10);
einer Batterie (40), die durch einen elektrischen Leistungsgenerator (35), der durch eine Antriebsleistung der Maschine angetrieben wird, geladen wird;
einer Leerlaufstoppsteuerungseinheit (90), die die Maschine stoppt;
einer SOC-Änderungsbetragserfassungseinheit (88), die einen Betrag einer Änderung in einem Ladezustand der Batterie erfasst;
einer Ausführungsbeschränkungseinheit (300), die einen Stopp der Maschine durch eine Leerlaufstoppsteuerung gemäß dem Betrag der Änderung in dem Ladezustand erlaubt oder verhindert, wobei
die Ausführungsbeschränkungseinheit Zeitpunkte für das Erlauben und das Verhindern derart bestimmt, dass ein Betrag einer Erhöhung in dem Ladezustand zu einer Zeit, wenn die Maschine durch die Leerlaufstoppsteuerung nicht gestoppt ist, größer wird als ein Betrag einer Verringerung in dem Ladezustand zu einer Zeit, wenn die Maschine gestoppt ist, in einem Fall, in dem die Batterie nicht vollständig geladen ist, wobei
die Leerlaufstoppsteuerungseinheit die Maschine stoppt, wenn eine vorbestimmte Stoppbedingung erfüllt ist, und die Maschine erneut startet, wenn eine vorbestimmte Neustartbedingung während des Stopps der Maschine erfüllt ist,
**dadurch gekennzeichnet, dass**
die Ausführungsbeschränkungseinheit umfasst:

eine Leerlaufstoppneustartanforderungseinheit (340), die das Verhindern durch ein Neustarten der Maschine ausführt, wenn der Betrag einer Verringerung in dem Ladezustand zu einer Zeit, wenn die Maschine gestoppt ist, einen ersten vorbestimmten Wert überschreitet; und
eine Leerlaufstopperlaubniseinheit (320), die einen Stopp der Maschine durch die Leerlaufstoppsteuerung erlaubt, wenn der Betrag einer Erhöhung in dem Ladezustand zu der Zeit, wenn die Maschine nicht gestoppt ist, einen zweiten vorbestimmten Wert überschreitet.

8. Fahrzeugsteuerungsverfahren zum Steuern eines Fahrzeuges mit einer Maschine (10), und einer Batterie (40), die durch einen elektrischen Leistungsgenerator (35), der durch eine Antriebsleistung der Maschine angetrieben wird, geladen wird, wobei das Fahrzeugsteuerungsverfahren aufweist:

Stoppen der Maschine;

Erfassen eines Betrages einer Änderung in einem Ladezustand der Batterie;

Erlauben und Verhindern eines Stopps der Maschine durch eine Leerlaufstoppsteuerung gemäß dem Betrag einer Änderung in dem Ladezustand, und

Bestimmen von Zeitpunkten für das Erlauben und das Verhindern, so dass ein Betrag einer Erhöhung in dem Ladezustand zu einer Zeit, wenn die Maschine durch die Leerlaufstoppsteuerung nicht gestoppt ist, größer wird als ein Betrag einer Verringerung in dem Ladezustand zu einer Zeit, wenn die Maschine gestoppt ist, in einem Fall, in dem die Batterie nicht vollständig geladen ist,

Stoppen der Maschine, wenn eine vorbestimmte Stoppbedingung erfüllt ist, und erneutes Starten der Maschine, wenn eine vorbestimmte Neustartbedingung während eines Stopps der Maschine erfüllt ist,

**gekennzeichnet durch**

Ausführung des Verhinderns durch Neustarten der Maschine, wenn der Betrag einer Verringerung in dem Ladezustand zu der Zeit, wenn die Maschine gestoppt ist, einen ersten vorbestimmten Wert überschreitet; und

Erlauben eines Stopps der Maschine durch die Leerlaufstoppsteuerung, wenn der Betrag einer Erhöhung in dem Ladezustand zu der Zeit, wenn die Maschine nicht gestoppt ist, einen zweiten vorbestimmten Wert überschreitet.

**Revendications**

1. Appareil de commande de véhicule qui est monté dans un véhicule ayant un moteur (10), et une batterie (40) qui est chargée par un générateur d'énergie électrique (35) qui est entraîné par une puissance motrice du moteur, l'appareil de commande de véhicule comprenant :

   une unité de commande d'arrêt de ralenti (90) qui arrête le moteur ;
   une unité de détection de quantité de changement de SOC (88) qui détecte une quantité de changement dans un état de charge de la batterie ; et
   une unité de restriction d'exécution (300) qui permet et empêche l'arrêt du moteur par une commande d'arrêt de ralenti selon la quantité de changement à l'état de charge, dans lequel :
   l'unité de restriction d'exécution détermine les moments pour l'autorisation et la prohibition de sorte qu'une quantité d'augmentation à l'état de charge à un moment où le moteur n'est pas arrêté par la commande d'arrêt de ralenti devient plus importante qu'une quantité de diminution de SOC à un moment où le moteur est arrêté, dans un cas dans lequel la batterie n'est pas complètement chargée, dans lequel :

      l'unité de commande d'arrêt de ralenti arrête le moteur lorsqu'une condition d'arrêt prédéterminée est satisfaite, et redémarre le moteur lorsqu'une condition de redémarrage prédéterminée est satisfaite pendant l'arrêt du moteur,
      **caractérisé en ce que** :
      l'unité de restriction d'exécution comprend :

         une unité de requête de redémarrage d'arrêt de ralenti (340) qui exécute la prohibition en redémarrant le moteur lorsque la quantité de diminution à l'état de charge au moment où le moteur est arrêté, dépasse une première valeur prédéterminée ; et
         une unité d'autorisation d'arrêt de ralenti (320) qui permet l'arrêt du moteur par la commande d'arrêt de ralenti lorsque la quantité d'augmentation à l'état de charge à un moment où le moteur n'est pas arrêté, dépasse une seconde valeur prédéterminée.

2. Appareil de commande de véhicule selon la revendication 1, comprenant en outre :

   une première unité de calcul de temps (410) qui calcule un premier temps depuis l'arrêt du moteur pour redémarrer le moteur comme demandé par la commande d'arrêt de ralenti ;
   une unité de calcul de courant de consommation de groupe auxiliaire qui calcule un courant de consommation de groupe auxiliaire qui est consommé par un groupe auxiliaire qui fonctionne à l'aide de l'état de charge de la batterie ; et
   une première unité de calcul de valeur prédéterminée qui calcule la première valeur prédéterminée sur une base du premier moment et du courant de consommation de groupe auxiliaire.

3. Appareil de commande de véhicule selon la revendication 2, comprenant en outre :

une unité de calcul de degré de requête de charge de batterie qui détecte un degré de requête de charge, dans lequel le degré de requête de charge de batterie indique un degré d'une tendance de la batterie à être chargé à un moment où la requête de charge de batterie est réalisée ; et
une première unité de correction de valeur prédéterminée qui corrige la première valeur prédéterminée sur la base du degré de requête de charge.

4. Appareil de commande de véhicule selon l'une quelconque des revendications 2 à 3, comprenant en outre :

une seconde unité de calcul de temps qui calcule un second temps lorsque l'arrêt du moteur, suite à la condition d'arrêt prédéterminée après le redémarrage du moteur, est prohibé, comme autorisé dans la commande d'arrêt de ralenti ;
une unité d'estimation de courant de charge qui estime un courant de charge de la batterie par unité de temps ; et
une seconde unité de calcul de valeur prédéterminée qui calcule la seconde valeur prédéterminée sur une base du second temps et du courant de charge.

5. Appareil de commande de véhicule selon la revendication 4, comprenant en outre :

une unité de calcul de degré de requête de charge de batterie qui détecte un degré de requête de charge de la batterie ; et
une seconde unité de correction de valeur prédéterminée qui corrige la seconde valeur prédéterminée sur la base du degré de requête de charge de la batterie.

6. Appareil de commande de véhicule selon l'une quelconque des revendications 1 à 5, comprenant en outre :

une unité de calcul de quantité de charge excédentaire qui calcule, en tant que quantité de charge excédentaire, une différence entre un véritable changement de l'état de charge et un changement cible de transition à l'état de charge, le changement cible de transition chutant à plusieurs reprises selon la première valeur prédéterminée et augmentant selon la seconde valeur prédéterminée ; et
une unité de correction de surplus qui corrige la seconde valeur prédéterminée en soustrayant la quantité de charge excédentaire de la seconde valeur prédéterminée.

7. Véhicule comprenant :

un moteur (10) ;
une batterie (40) qui est chargée par un générateur d'énergie électrique (35) qui est entraîné par une énergie motrice du moteur ;
une unité de commande d'arrêt de ralenti (90) qui arrête le moteur ;
une unité de détection de quantité de changement de SOC (88) qui détecte une quantité de changement dans un état de charge de la batterie ;
une unité de restriction d'exécution (300) qui permet et empêche l'arrêt du moteur par une commande d'arrêt de ralenti selon la quantité de changement à l'état de charge, dans lequel :
l'unité de restriction d'exécution détermine les temps pour l'autorisation et la prohibition de sorte qu'une quantité d'augmentation à l'état de charge à un moment où le moteur n'est pas arrêté par la commande d'arrêt de ralenti devient plus importante qu'une quantité de réduction à l'état de charge à un moment où le moteur est arrêté, dans un cas dans lequel la batterie n'est pas complètement chargée, dans lequel :

l'unité de commande d'arrêt de ralenti arrête le moteur lorsqu'une condition d'arrêt prédéterminée est satisfaite, et redémarre le moteur lorsqu'une condition de redémarrage prédéterminée est satisfaite pendant l'arrêt du moteur,
**caractérisé en ce que** :
l'unité de restriction d'exécution comprend :

une unité de requête de redémarrage d'arrêt de ralenti (340) qui exécute la prohibition en redémarrant le moteur lorsque la quantité de réduction à l'état de charge au moment où le moteur est arrêté, dépasse une première valeur prédéterminée ; et
une unité d'autorisation d'arrêt de ralenti (320) qui permet l'arrêt du moteur par la commande d'arrêt de ralenti lorsque la quantité d'augmentation à l'état de charge au moment où le moteur n'est pas arrêté, dépasse une seconde valeur prédéterminée.

8. Procédé de commande de véhicule pour commander un véhicule ayant un moteur (10), et une batterie (40) qui est chargée par un générateur d'énergie électrique (35) qui est entraîné par une énergie motrice du moteur, le procédé de commande de véhicule comprenant les étapes suivantes :

arrêter le moteur ;

détecter une quantité de changement dans un état de charge de la batterie ;

permettre et prohiber l'arrêt du moteur par une commande d'arrêt de ralenti selon la quantité de changement à l'état de charge, et

déterminer les temps pour l'autorisation et la prohibition de sorte qu'une quantité d'augmentation à l'état de charge à un moment où le moteur n'est pas arrêté par la commande d'arrêt de ralenti devient plus importante qu'une quantité de diminution à l'état de charge à un moment où le moteur est arrêté, dans un cas dans lequel la batterie n'est pas tout à fait chargée,

arrêter le moteur lorsqu'une condition d'arrêt prédéterminée est satisfaite, et redémarrer le moteur lorsqu'une condition de redémarrage prédéterminée est satisfaite pendant l'arrêt du moteur,

**caractérisé par** les étapes suivantes :

exécuter la prohibition en redémarrant le moteur lorsque la quantité de diminution à l'état de charge au moment où le moteur est arrêté, dépasse une première valeur prédéterminée ; et

permettre l'arrêt du moteur par la commande d'arrêt de ralenti lorsque la quantité d'augmentation à l'état de charge à un moment où le moteur n'est pas arrêté, dépasse une seconde valeur prédéterminée.

# F I G . 1

EP 2 808 521 B1

# FIG.2

Ss: STOP/RESTART COMMAND
Sv: VOLTAGE COMMAND VALUE
Rbt: BATTERY CHARGE REQUEST
Ris: IDLING STOP PERMISSION/
      PROHIBITION REQUEST
Reg: RESTART REQUEST

# FIG.3

```
           ┌─────────────────────────────────┐
           │    IDLING STOP EXECUTION         │
           │    RESTRICTION PROCESSING        │
           └─────────────────────────────────┘
                          │
                          │            S110
                      ╱───────────╲
                  ╱                   ╲
              ╱    IS CHARGE CURRENT      ╲        YES
          ╱   INTEGRATED VALUE Zc EQUAL TO   ╲──────────────┐
          ╲   OR LARGER THAN PERMISSION      ╱              │
              ╲    CRITERIAL VALUE Z2?    ╱                  │
                  ╲                   ╱                      │         S120
                      ╲───────────╱                         │
                          │                    ┌────────────────────────────────┐
                          │ NO                 │  SET PERMISSION/PROHIBITION     │
                          │                    │  FLAG FL TO PERMISSION          │
                          │            S130     └────────────────────────────────┘
                      ╱───────────╲                         │
                  ╱                   ╲                      │
              ╱    IS DISCHARGE           ╲                  │
          ╱   CURRENT INTEGRATED VALUE       ╲   YES         │
          ╲   Zd EQUAL TO OR LARGER THAN     ╱──────┐        │
              ╲   RESTART CRITERIAL       ╱         │        │
                  ╲    VALUE Z1?      ╱             │        │
                      ╲───────────╱                 │        │
                          │                         │        │
                          │ NO                      │        │
                          │            S160         │        │
                      ╱───────────╲                 │        │
                  ╱                   ╲     YES      │        │
              ╱    IS ENGINE RESTART     ╲──────────→│        │
              ╲   CONDITION FULFILLED?   ╱           │        │
                  ╲                   ╱              │        │
                      ╲───────────╱                 │        │
                          │                         │  S140  │
                          │ NO       ┌────────────────────────────────┐
                          │          │  SET PERMISSION/PROHIBITION     │
                          │          │  FLAG FL TO PROHIBITION         │
                          │          └────────────────────────────────┘
                          │                         │  S150
                          │          ┌────────────────────────────────┐
                          │          │   OUTPUT RESTART REQUEST        │
                          │          └────────────────────────────────┘
                          │                         │        │
                          │←────────────────────────┴────────┘
                          │
                   ┌─────────────┐
                   │   RETURN    │
                   └─────────────┘
```

28

# FIG.4

CHARGE CURRENT INTEGRATED
VALUE CALCULATION PROCESSING

S210

IS CHANGEOVER
MADE TO IDLING STOP
STATE?

YES

NO

S220

CLEAR CHARGE CURRENT
INTEGRATED VALUE Zc

S230

IS VEHICLE STATE
OTHER THAN IDLING STOP
STATE?

YES

NO

S240

CALCULATE CHARGE
CURRENT INTEGRATED VALUE
Zc BY INTEGRATING BATTERY
CURRENT Ab

RETURN

# FIG.5

```
   ┌─────────────────────────────────────┐
   │ DISCHARGE CURRENT INTEGRATED        │
   │ VALUE CALCULATION PROCESSING        │
   └─────────────────────────────────────┘
                    │
                    │        S310
              ╱───────────────╲
             ╱  IS CHANGEOVER  ╲   YES
            ╱  MADE TO STATE OF ╲──────────┐
            ╲     RESTART?      ╱          │
             ╲                 ╱           │           S320
              ╲───────────────╱     ┌──────────────────────────┐
                    │ NO           │ CLEAR DISCHARGE CURRENT   │
                    │        S330  │ INTEGRATED VALUE Zd       │
              ╱───────────────╲    └──────────────────────────┘
             ╱   IS VEHICLE    ╲  YES
            ╱ STATE IDLING STOP ╲──────┐
            ╲     STATE?        ╱      │
             ╲                 ╱       │        S340
              ╲───────────────╱   ┌───────────────────────┐
                    │ NO         │ CALCULATE DISCHARGE   │
                    │            │ CURRENT INTEGRATED    │
                    │            │ VALUE Zd ON BASIS OF  │
                    │            │ BATTERY CURRENT Ab    │
                    │            └───────────────────────┘
                    │◄───────────────────┘
                    │
              ┌───────────┐
              │  RETURN   │
              └───────────┘
```

# FIG.6

EP 2 808 521 B1

# FIG. 7

# F I G . 8

RESTART CRITERIAL VALUE
CALCULATION PROCESSING

FETCH VEHICLE SPEED HISTORY
INFORMATION — S405

ESTIMATE UNIT IS REQUEST TIME TS1 — S410

FETCH ALTERNATOR CURRENT Aa
AND BATTERY CURRENT Ab — S415

CALCULATE AUXILIARY CONSUMPTION
CURRENT Ac — S420

CALCULATE TENTATIVE VALUE FZ1 OF
RESTART CRITERIAL VALUE ON BASIS
OF UNIT IS REQUEST TIME TS1 AND
AUXILIARY CONSUMPTION CURRENT Ac — S422

CALCULATE BATTERY CHARGE
REQUEST DEGREE RR — S424

CALCULATE RESTART CRITERIAL
VALUE Z1 BY CORRECTING TENTATIVE
VALUE FZ1 ON BASIS OF BATTERY
CHARGE REQUEST DEGREE RR — S430

RETURN

# FIG.9

# FIG.10

# F I G . 11A

# F I G . 11B

# F I G . 12

```
    ┌─────────────────────────────┐
    │  PERMISSION CRITERIAL VALUE │
    │    CALCULATION PROCESSING   │
    └─────────────────────────────┘
                   │
    ┌─────────────────────────────┐
    │  FETCH VEHICLE SPEED HISTORY│ ── S505
    │         INFORMATION         │
    └─────────────────────────────┘
                   │
    ┌─────────────────────────────┐
    │    ESTIMATE UNIT IS         │ ── S510
    │  PERMISSION PROHIBITION TIME TS2 │
    └─────────────────────────────┘
                   │
    ┌─────────────────────────────┐
    │   FETCH VARIOUS PIECES OF   │ ── S515
    │    INFORMATION ON BATTERY   │
    └─────────────────────────────┘
                   │
    ┌─────────────────────────────┐
    │ CALCULATE BATTERY CHARGE CURRENT │ ── S520
    │      ESTIMATED VALUE XAb    │
    └─────────────────────────────┘
                   │
    ┌─────────────────────────────┐
    │ CALCULATE TENTATIVE VALUE FZ2 OF │
    │ PERMISSION CRITERIAL VALUE ON BASIS │
    │ OF UNIT IS PERMISSION PROHIBITION TIME │ ── S522
    │  TS2 AND BATTERY CHARGE CURRENT │
    │      ESTIMATED VALUE XAb    │
    └─────────────────────────────┘
                   │
    ┌─────────────────────────────┐
    │   CALCULATE BATTERY CHARGE  │ ── S524
    │      REQUEST DEGREE RR      │
    └─────────────────────────────┘
                   │
    ┌─────────────────────────────┐
    │  CALCULATE PERMISSION CRITERIAL │
    │ VALUE Z2 BY CORRECTING TENTATIVE │ ── S530
    │  VALUE FZ2 ON BASIS OF BATTERY │
    │   CHARGE REQUEST DEGREE RR  │
    └─────────────────────────────┘
                   │           S540
                   ◇──────────────── NO
                ⟨ Z2 < Z1? ⟩───────────┐
                   ◇                   │
                   │ YES               │
    ┌─────────────────────────────┐    │
    │         Z2 ← Z1             │ ── S550 │
    └─────────────────────────────┘    │
                   │←──────────────────┘
             ┌──────────┐
             │  RETURN  │
             └──────────┘
```

# FIG. 13

# FIG. 14

CONDITION: CHARGE VOLTAGE V1,
DEGREE OF DETERIORATION $\beta 1$, POLARIZABILITY $\gamma 1$

| BATTERY CHARGE CURRENT (A) | | TEMPERATURE (°C) | | | | |
|---|---|---|---|---|---|---|
| | | −T1 | −10 | 0 | 10 | T2 |
| SOC (%) | $\alpha 1$ | k1 | ••• | ••• | ••• | k2 |
| | 90 | ••• | 20 | 30 | 50 | ••• |
| | 85 | ••• | 30 | 50 | 80 | ••• |
| | 80 | ••• | 40 | 60 | 100 | ••• |
| | $\alpha 2$ | k3 | ••• | ••• | ••• | k4 |

T1, T2, $\alpha 1$, $\alpha 2$, AND k1 TO k4 ARE NUMERICAL VALUES

37

# F I G . 15A

UNIT IS PERMISSION PROHIBITION TIME TS2

# F I G . 15B

UNIT IS PERMISSION PROHIBITION TIME TS2

# FIG.16

```
         ┌─────────────────────────┐
         │    ELECTRIC POWER       │
         │ GENERATION VOLTAGE      │
         │ VARIABILITY CONTROL     │
         │     PROCESSING          │
         └────────────┬────────────┘
                      │
                      │         S610
              ╱───────┴────────╲
        NO  ╱  HAS PERMISSION   ╲
       ◄───┤ CRITERIAL VALUE     │
           ╲ CALCULATION         ╱
            ╲ PROCESSING JUST    ╱
             ╲ BEEN PERFORMED? ╱
              ╲───────┬───────╱
                   YES│
                      │
        ┌─────────────┴─────────────┐
        │  FETCH DISCHARGE CURRENT   │
        │  INTEGRATED VALUE Wzd IN   │── S620
        │  LAST IDLING STOP PERIOD   │
        └─────────────┬─────────────┘
                      │
                      │      S630
               ╱──────┴──────╲       NO
              ╱                ╲──────────────┐
              ╲   Wzd < Z2?    ╱               │
               ╲──────┬───────╱                │
                   YES│   S640                 │  S650
        ┌─────────────┴──────────┐  ┌──────────┴──────────┐
        │  OUTPUT REQUEST TO      │  │  OUTPUT REQUEST TO   │
        │  INCREASE ELECTRIC      │  │  REDUCE ELECTRIC     │
        │  POWER GENERATION       │  │  POWER GENERATION    │
        │  VOLTAGE                │  │  VOLTAGE             │
        └─────────────┬──────────┘  └──────────┬──────────┘
                      │                         │
                      ├─────────────────────────┘
                      │
              ┌───────┴───────┐
              │    RETURN      │
              └───────────────┘
```

EP 2 808 521 B1

# F I G . 17

SURPLUS CHARGE AMOUNT
CALCULATION PROCESSING

S710

IS CHANGEOVER
MADE TO STATE OF
RESTART?　　　YES

NO

S720

OBTAIN SURPLUS CHARGE AMOUNT AS
SURPLUS CHARGE AMOUNT LAST VALUE +
(RESTART CRITERIAL VALUE Z1 – DISCHARGE
CURRENT INTEGRATED VALUE Zd)

S730

IS CHANGEOVER
MADE TO IDLING STOP
STATE?　　　YES

NO

S740

OBTAIN SURPLUS CHARGE AMOUNT AS
SURPLUS CHARGE AMOUNT LAST VALUE +
(CHARGE CURRENT INTEGRATED VALUE Zc –
PERMISSION CRITERIAL VALUE Z2)

RETURN

# F I G . 18

PERMISSION CRITERIAL VALUE
VARIABILITY PROCESSING

S810

IS SURPLUS
CHARGE AMOUNT LARGER
THAN 0?　　　YES

NO

S820

OBTAIN PERMISSION CRITERIAL VALUE Z2
AS PERMISSION CRITERIAL VALUE (INITIAL
VALUE) Z2 – SURPLUS CHARGE AMOUNT

RETURN

40

# FIG. 19

# FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010174827 A
- JP 2010223217 A
- US 2002017261 A1
- US 2010217484 A1
- EP 1220413 A1